# EUROPEAN PATENT SPECIFICATION

(11) **EP 2 949 913 B1**
(45) Date of publication and mention of the grant of the patent: **26.07.2017**
(21) Application number: 14198362.7
(22) Date of filing: 16.12.2014
(51) Int. Cl.: F02M 35/16, F02M 35/10, F02M 35/12, F02B 27/00, F02B 27/02, B62J 29/00, B60K 13/02, B62M 7/02, B62K 11/06, B62K 19/30, B62K 11/04

(54) **Ram intake unit for a straddle-type vehicle**
Ansaugstaumodul für ein Grätschsitzfahrzeug
Module d'admission à compression dynamique pour un véhicule de type à califourchon

(30) Priority: 30.05.2014 JP 2014112936
(43) Date of publication of application: 02.12.2015
(73) Proprietor: Yamaha Hatsudoki Kabushiki Kaisha, Iwata-shi, Shizuoka 438-8501 (JP)
(72) Inventor: Tachibana, Masumi, Shizuoka-ken, 438-8501 (JP)
(74) Representative: Moreland, David

(56) References cited:
- GB-A- 2 220 986
- JP-A- 2010 095 244
- JP-A- 2010 127 076
- JP-A- 2012 001 035
- US-A1- 2007 149 105
- US-A1- 2014 090 912

## Description

### FIELD OF INVENTION

The present invention relates to saddled vehicle, saddle-ride vehicle or straddle-type vehicle, such as a saddle-straddling type motor vehicle that can achieve a supercharging effect by ram pressure.

### BACKGROUND TO INVENTION

There is provided a saddle-ride or straddle-type vehicle, such as a motorcycle, that can achieve a supercharging effect by leading air flowing from the front to an engine through an air cleaner during the travelling. In such a motorcycle, a duct is provided, which is used when outside air is led to the air cleaner.

In a motorcycle, described in JP 2010-95244 A (KAWASAKI HEAVY IND LTD), a ram duct unit made of resin is connected to the front end of a head pipe. In the ram duct unit, a duct taking in air to the engine, a stay supporting a side mirror, and a bracket supporting a meter unit are integrally formed of resin with one another.

It is difficult to provide an adjustment mechanism in the duct of the ram duct unit achieved by integral formation, which is used when an amount of air requires adjustment.

Further, when a honeycomb structure, rigid-frame structure or the like is applied to the stay in the ram duct unit, rigidity required to support the side mirrors can be achieved without an increase in thickness of the bracket. Therefore, the weight of a front portion of the vehicle can be reduced. In this case, however, the configuration of the stay becomes more complicated, so that the integral formation of the ram duct unit becomes difficult.

An object of the present invention is to provide a saddle-ride or straddle-type vehicle, such as a saddle-straddling type motor vehicle, in which an amount of air led to an engine can be adjusted and weight of a front portion of the vehicle can be reduced.

It is an object of at least one embodiment of at least one aspect of the present invention to obviate or at least mitigate one or more problems in the prior art.

JP 2012001035 (KAWASAKI HEAVY IND LTD) discloses an intake structure including a ram duct that forms part of an air passage for taking in air to an engine.

### SUMMARY OF INVENTION

Various aspects of the present invention are defined in the appended independent claims. Some optional features are defined in the appended dependent claims.

Described herein by way of example is a saddled vehicle, saddle-ride vehicle or straddle-type vehicle, such as a saddle-straddling type motor vehicle. The vehicle may comprise a head pipe. The
vehicle may comprise a body frame that may extend rearward from the head pipe. The vehicle may comprise an engine supported by the body frame. The vehicle may comprise an air guide member. The air guide member may have an upper surface, a lower surface, a right side surface and a left side surface. The air guide member may be arranged in front of the head pipe to form an intake passage leading air to the engine. The vehicle may comprise an attachment member. The attachment member may be attached to or provided, such as integrally attached to or provided, at least part of the left side surface and at least part of the right side surface of the air guide member, and the upper surface of the air guide member, in a vehicle width direction. The vehicle may comprise left and right rear-view mirrors. The left and right rear-view mirrors may be attached to or provided at the attachment member. The vehicle may comprise an adjustment mechanism. The adjustment mechanism may adjust an amount of air to be taken into the intake passage of the air guide member. The air guide member may include or comprise a first passage forming member. The first passage forming member may have or define the left side surface. The first passage forming member may have or define a respective first upper surface portion and a respective first lower surface portion extending rightward from the left side surface. The air guide member may include or comprise a second passage forming member. The second passage forming member may have or define the right side surface. The second passage forming member may have or define a respective second upper surface portion and a respective second lower surface portion extending leftward from the right side surface. The air guide member may include or comprise a passage partition. The passage partition may partition or separate at least part of the intake passage into an upper passage and a lower passage. The intake passage, the upper surface formed by the first and second upper surface portions, and the lower surface formed by the first and second lower surface portions may be formed by coupling of the first upper surface portion to the second upper surface portion and coupling of the first lower surface portion to the second lower surface portion. The passage partition may be provided at or on at least one of the first and second passage forming members. The adjustment mechanism may include or comprise a current plate. The current plate may be arranged or provided in the upper passage to be openable and closable. The adjustment mechanism may include or comprise a diaphragm open/close device. The diaphragm open/close device may open and close the current plate. The diaphragm open/close device may be provided or arranged on the upper surface of the air guide member to be sandwiched between the first upper surface portion of the first passage forming member and the second upper surface portion of the second passage forming member.

In the vehicle, e.g. the saddle-straddling type motor vehicle, the attachment member may be provided, such as integrally provided, on the right side surface and the left side surface of the air guide member, and the upper surface of the air guide member, in the vehicle width direction. In this case, since both side surfaces of the air guide member are sandwiched between the attachment member, the coupled state, in which the first and second passage forming members, which may form the air guide member, are coupled to each other, may be maintained. Thus, a gap may be prevented from being formed or generated between the first and second passage forming members. Therefore, air may be efficiently led from the intake passage to the engine.

Further, since the air guide member may be formed from coupling of the first and second passage forming members to each other, the adjustment mechanism may be provided in the intake passage. Therefore, an amount of air led to the engine may be adjusted.

The above-mentioned configuration may cause the attachment member to be separately fabricated from the air guide member. In this case, flexibility in shape or design of the attachment member may be increased. Thus, the attachment member may be formed into a shape, in which its weight may be reduced, while rigidity required to support the mirrors may be ensured. Therefore, the weight of the front portion of the vehicle may be reduced.

Further, the above-mentioned configuration may cause the left and right mirrors to be attached to the attachment member. In this manner, the attachment member may have a function of maintaining the first and second passage forming members in the coupled state and a function of supporting the left and right of mirrors. Thus, the number of components of the elements provided on the air guide member may not be increased.

The vehicle, e.g. the saddle-straddling type motor vehicle, may include or comprise a driving device that may be provided at or on at least one of the left and right side surfaces of the air guide member, and may drive the diaphragm open/close device.

In this case, since the driving device may be provided at or on at least one of the left and right side surfaces of the air guide member, the center of gravity of the front portion of the vehicle may be lowered. Further, since the left side surface of the first passage forming member and the right side surface of the second passage forming member may be sandwiched between the attachment member, a gap may be prevented from being formed or generated between the first passage forming member and the second passage forming member. This may be due to the weight of the driving device, which may be provided at the side surface of the air guide member. Further, since it may not be necessary to provide the driving device at the upper portion of the air guide member, limitation of the shape of the front portion of the vehicle may be inhibited or prevented. Thus, flexibility in design of aerodynamics characteristics of the front portion of the vehicle may be improved.

The driving device may include or comprise a pressure accumulator. The pressure accumulator may accumulate intake pressure of the engine. The diaphragm open/close device may open and close the current plate based on the pressure accumulated by the pressure accumulator.

In this case, since it may not be necessary to provide the pressure accumulator on the upper portion of the air guide member, the center of gravity of the front portion of the vehicle may be lowered. Further, the shape or design of the front portion of the vehicle above the air guide member may not be limited by the pressure accumulator.

The driving device may further include or comprise a switch valve. The switch valve may be configured to be switchable or operable between a first state, in which the accumulated pressure in the pressure accumulator may be led to the diaphragm open/close device and a second state, in which atmospheric pressure may be led to the diaphragm open/close device.

In this case, since it may not be necessary to provide the switch valve on the upper portion of the air guide member, the center of gravity of the front portion of the vehicle may be lowered. Further, the shape of the front portion of the vehicle above the air guide member may not be limited by the switch valve.

The pressure accumulator may be provided at or on at least one of the left and right side surfaces a of the air guide member. The switch valve may be provided at or on at least another one of the left and right side surfaces of the air guide member.

In this case, since the pressure accumulator and the switch valve may be provided on respective side surfaces of the air guide member, the weight of the right and left portions of the front portion of the vehicle may be kept balanced.

The upper surface of the air guide member may have a portion. The portion may be inclined downward and forward. The diaphragm open/close device may be provided on the portion that may be inclined downward, of the upper surface of the air guide member.

In this case, since the upper surface of the air guide member may be inclined downward and forward, rain water may be unlikely to enter the intake passage. Further, since the diaphragm open/close device may be provided on the portion that may be inclined downward of the upper surface of the air guide member, the diaphragm open/close device may be provided at a low position on the air guide member. Therefore, the center of gravity of the front portion of the vehicle may be lowered. Further, flexibility in design of aerodynamics characteristics of the front portion of the vehicle may be improved.

The attachment member may include or comprise a pair of side surface holding portions. The pair of side surface holding portions may abut against at least part of the right side surface and at least part of the left side surface of the air guide member. The attachment member may include or comprise a coupling portion. The coupling portion may couple the pair of side surface holding portions to each other at the portion that may be inclined downward of the upper surface. The coupling portion may be arranged on the portion that may be inclined downward of the upper surface of the air guide member. The coupling portion may have an opening. The diaphragm open/close device may be arranged in the opening of the coupling portion.

Since the coupling portion of the attachment member may be provided at the portion that may be inclined downward of the upper surface of the air guide member, the attachment member may be provided at the low position on the air guide member. Further, since the diaphragm open/close device may be located in the opening of the coupling portion with the coupling portion of the attachment member being arranged on the upper surface of the air guide member, the diaphragm open/close device may not overlap with the coupling portion of the attachment portion on the upper surface of the air guide member. Thus, the center of gravity of the front portion of the vehicle may be lowered. Further, flexibility in design of aerodynamics characteristics of the front portion of the vehicle may be improved.

The saddle-ride or straddle-type vehicle, e.g. the saddle-straddling type motor vehicle, may further include or comprise a temperature sensor. The temperature sensor may detect temperature of air passing through the intake passage. The temperature sensor may be provided at or on at least one of the left and right side surfaces of the air guide member.

In this case, since the temperature sensor may be provided at or on at least one of the left and right side surfaces of the air guide member, the temperature sensor may detect the temperature of the air led to the engine without being affected by the heat generated from the engine. Further, the shape or design of the front portion of the vehicle above the air guide member may not be limited by the temperature sensor.

The upper surface of the air guide member may have a portion that is inclined downward and forward. The attachment member may include or comprise a pair of side surface holding portions. The side surface holding portions may abut against at least part of the right side surface and at least part of the left side surface of the air guide member. The attachment member may include or comprise a coupling portion. The coupling portion may couple the pair of side surface holding portions to each other at the portion that may be inclined downward of the upper surface. The coupling portion may be arranged on the portion that may be inclined downward of the upper surface of the air guide member.

Since the coupling portion of the attachment member may be provided at the portion that may be inclined downward of the upper surface of the air guide member, the attachment member may be provided at a low position on the air guide member. Therefore, the center of gravity of the front portion of the vehicle may be lowered. Further, flexibility in design of aerodynamics characteristics of the front portion of the vehicle may be improved.

Described herein by way of example is a method of assembling or arranging a saddled vehicle, saddle-ride vehicle or straddle-type vehicle, such as a saddle-straddling type motor vehicle, according to the first aspect of the invention.

The method may comprise providing a head pipe, a body frame, an engine, an air guide member and an attachment member.

The method may comprise arranging the body frame to extend rearward from the head pipe.

The method may comprise arranging the engine to be supported by the body frame. The air guide member may have an upper surface, a lower surface, a right side surface and a left side surface.

The method may comprise arranging the air guide member to be in front of the head pipe to form an intake passage that leads air to the engine.

The method may comprise attaching or providing, such as integrally attaching or providing, the attachment member to at least part of the left side surface and at least part of the right side surface of the air guide member, and the upper surface of the air guide member, in a vehicle width direction.

The method may comprise providing or attaching left and right rear-view mirrors to the attachment member.

The method may comprise providing an adjustment mechanism to adjust an amount of air to be taken into the intake passage of the air guide member. The air guide member may include or comprise a first passage forming member. The first passage forming member may have or define the left side surface. The first passage forming member may have a respective first upper surface portion and a respective first lower surface portion extending rightward from the left side surface. The air guide member may include or comprise a second passage forming member. The second passage forming member may have or define the right side surface. The second passage forming member may have a respective second upper surface portion and a respective second lower surface portion extending leftward from the right side surface. The air guide member may include or comprise a passage partition. The passage partition may partition or separate at least part of the intake passage into an upper passage and a lower passage.

The method may comprise coupling of the first upper surface portion to the second upper surface portion and coupling of the first lower surface portion to the second lower surface portion to form the intake passage, the upper surface formed by the first and second upper surface portions, and the lower surface formed by the first and second lower surface portions.

The method may comprise providing or arranging the passage partition at or on at least one of the first and second passage forming members.

The adjustment mechanism may include or comprise a current plate. The current plate may be provided in the upper passage to be openable and closable.

The adjustment mechanism may include or comprise a diaphragm open/close device. The diaphragm open/close device may open and close the current plate.

The method may comprise providing or arranging the diaphragm open/close device on the upper surface of the air guide member to be sandwiched between the first upper surface portion of the first passage forming member and the second upper surface portion of the second passage forming member.

Described herein by way of example only is an air guide member for a saddled vehicle, saddle-ride vehicle or straddle-type vehicle, such as a saddle-straddling type motor vehicle, according to the first aspect.

The air guide member may comprise an upper surface, a lower surface, a right side surface and a left side surface. The air guide member may be configured for arrangement in front of a head pipe of the vehicle to form an intake passage. The intake passage may lead air to an engine of the vehicle.

The air guide member may comprise a first passage forming member. The first passage forming member may have or define the left side surface. The first passage forming member may have a respective first upper surface portion and a respective first lower surface portion extending rightward from the left side surface.

The air guide member may comprise a second passage forming member. The second passage forming member may have or define the right side surface. The second passage forming member may have a respective second upper surface portion and a respective second lower surface portion extending leftward from the right side surface.

The air guide member may comprise a passage partition. The passage partition may partition or separate at least part of the intake passage into an upper passage and a lower passage.

The intake passage, the upper surface formed by the first and second upper surface portions, and the lower surface formed by the first and second lower surface portions may be formed by coupling of the first upper surface portion to the second upper surface portion and coupling of the first lower surface portion to the second lower surface portion. The passage partition may be arranged or provided at or on at least one of the first and second passage forming members.

Described herein by way of example only is an adjustment mechanism for a saddled vehicle, saddle-ride vehicle or straddle-type vehicle, such as a saddle-straddling type motor vehicle, according to the first aspect of the invention.

The adjustment mechanism may be configured for adjustment of an amount of air to be taken into an intake passage of an air guide member, such as an air guide as described above, of the vehicle. The adjustment mechanism may comprise a current plate. The current plate may be arrangable or providable in an upper passage of the air guide member to be openable and closable.

The adjustment mechanism may comprise a diaphragm open/close device. The diaphragm open/close device may open and close the current plate. The diaphragm open/close device may be arrangable or providable on an upper surface of the air guide member to be sandwiched between a first upper surface portion of a first passage forming member and a second upper surface portion of a second passage forming member of the air guide member. The adjustment mechanism may comprise any properties and/or features of the adjustment mechanism of the first aspect of the present invention.

Features described in relation to any of the above aspects may also be applicable to any of the other above aspects. Features described above and/or below individually and/or in combination in relation to any of the above aspects may be jointly or individually and/or separably applicable to any other of the above aspects. Apparatus features corresponding to those described above and/or below in relation to a method and also method features corresponding to the use, assembly and fabrication of any apparatus features described above and/or below are also intended as falling within the scope of the present invention.

### BRIEF DESCRIPTION OF DRAWINGS

An embodiment of the present invention will now be described, by way of example only, and with reference to the accompanying drawings, which are:
- **Figure 1**: a side view showing one side of a motorcycle according to one embodiment of the present invention;
- **Figure 2**: a front view of the motorcycle of Figure 1 as viewed from the front;
- **Figure 3**: a perspective view showing assembly steps of the front portion of the motorcycle of Figure 1;
- **Figure 4**: a perspective view showing the assembly steps of the front portion of the motorcycle of Figure 1;
- **Figure 5**: a perspective view showing the assembly steps of the front portion of the motorcycle of Figure 1;
- **Figure 6**: a perspective view showing the assembly steps of the front portion of the motorcycle of Figure 1;
- **Figure 7**: a perspective view showing the assembly steps of the front portion of the motorcycle of Figure 1;
- **Figure 8**: an exploded perspective view of a duct main body of Figure 3;
- **Figure 9**: an external perspective view showing the duct main body of Figure 8 being attached to an intake guide of Figure 3;
- **Figure 10**: a plan view showing a plurality of devices, which are used when a flap s driven, being attached to the duct main body;
- **Figure 11**: a side view of one side of the duct main body of Figure 10 viewed from a position further leftward than the vehicle;
- **Figure 12**: a side view of the other side of the duct main body of Figure 10 as viewed from a position further rightward than the vehicle;
- **Figure 13**: an external perspective view of a stay of Figure 3 as obliquely viewed rearward from above;
- **Figure 14**: a partial external perspective view of the stay of Figure 3 as obliquely viewed forward from below;
- **Figure 15**: an external perspective view showing a plurality of devices and members being attached to the duct main body;
- **Figure 16**: a side view of one side of the duct main body of Figure 15 as viewed from a position further leftward than the vehicle;
- **Figure 17**: a side view of the other side of the duct main body of Figure 15 as viewed from a position further rightward than the vehicle;
- **Figure 18**: a longitudinal cross sectional view of the front portion of the motorcycle taken along the line Q-Q of Figure 2;
- **Figure 19A**: a side view of a passage forming member of Figure 8 as viewed from a position further leftward than the vehicle;
- **Figure 19B**: a side view of a passage forming member of Figure 8 as viewed from a position further rightward than the vehicle; and
- **Figure 20**: an external perspective view showing a coupled state of a coupling portion of Figures 19A and 19B.

### DETAILED DESCRIPTION OF DRAWINGS

A saddled vehicle, saddle-ride vehicle or straddle-type vehicle, such as a saddle-straddling type motor vehicle, will be described below with reference to drawings. In the following description, a motorcycle will be described as one example of the saddle-ride or straddle-type vehicle, e.g. the saddle-straddling type motor vehicle.

### Schematic Configuration of Motorcycle

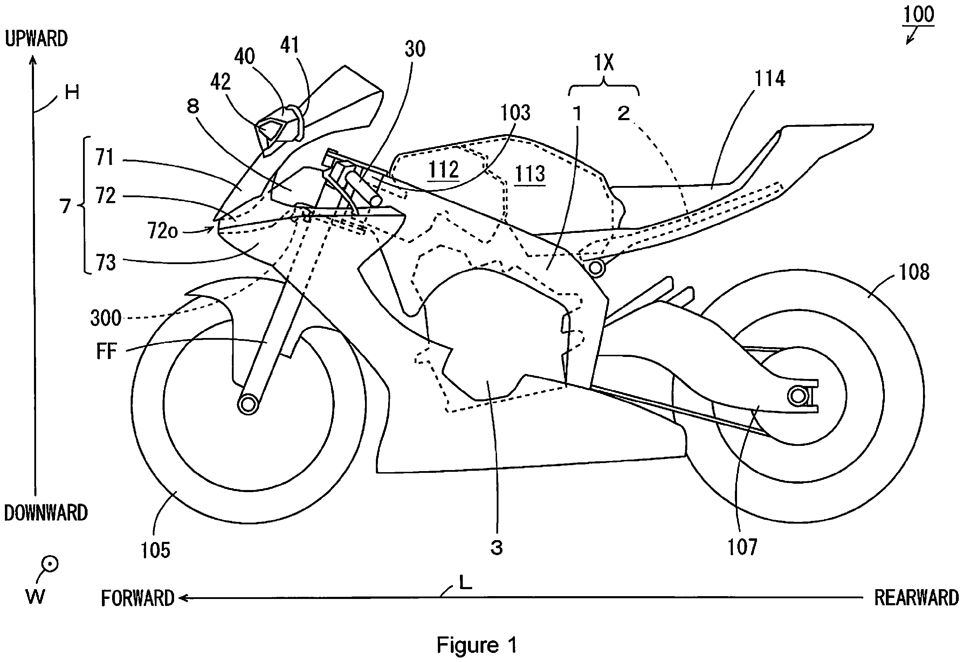

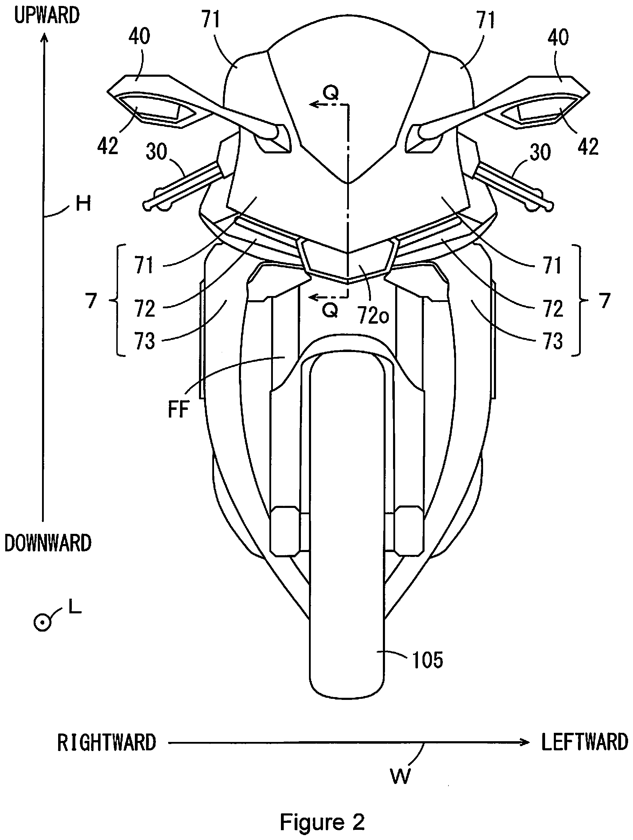

Figure 1 is a side view of one side of the motorcycle 100 according to one embodiment of the present invention, and Figure 2 is a front view of the motorcycle 100 of Figure 1 as viewed from the front. In Figures 1 and 2, the motorcycle 100 is shown standing up to be perpendicular to the road surface. In Figures 1, 2, and each of subsequent diagrams, a front-and-rear direction L, a width direction W and a top-and-bottom direction H of the motorcycle 100 are indicated by arrows. In the following description, a direction in which the arrow is directed in the front-and-rear direction L is referred to as forward, and its opposite direction is referred to as rearward. Further, a direction in which the arrow is directed in the width direction W is referred to as leftward, and its opposite direction is referred to as rightward. Further, a direction in which the arrow is directed in the top-and-bottom direction H is referred to as upward, and its opposite direction is referred to as downward.

As shown in Figure 1, the motorcycle 100 includes a head pipe 103 and a body frame 1X. The body frame 1X includes a pair of main frames 1, namely left and right main frames 1, and a pair of sub-frames 2, namely left and right sub-frames 2. The left and right main frames 1 obliquely extends downward and rearward from the head pipe 103. The rear ends of the left and right main frames 1 are curved downward. The left and right sub-frames 2 extends rearward from upper portions at the rear ends of the respective left and right main frames 1.

A duct unit 8 is provided in front of the head pipe 103. A front fork FF is provided at the head pipe 103 to be swingable or rotatable rightward and leftward. A pair of handles 30, namely left and right handles 30, is provided at the upper end of the front fork FF. A front wheel 105 is rotatably supported at the lower end of the front fork FF. A steering damper 300 is provided at the front fork FF. The steering damper 300 is arranged below the duct unit 8.

An engine 3 is provided at a lower portion of the left and right main frames 1. The engine 3 is supported by the left and right main frames 1. An air cleaner 112 is supported by the left and right main frames 1 at a position above the engine 3. A discharge port of the air cleaner 112 is connected to an intake port of the engine 3 through an intake pipe and a throttle body (not shown).

A fuel tank 113 is supported by the left and right main frames 1 behind the air cleaner 112. Further, a seat 114 is supported by the left and right sub-frames 2 behind the fuel tank 113. A rear arm 107 is provided to extend rearward from the lower ends of the left and right main frames 1. A rear wheel 108 is rotatably supported at the rear end of the rear arm 107.

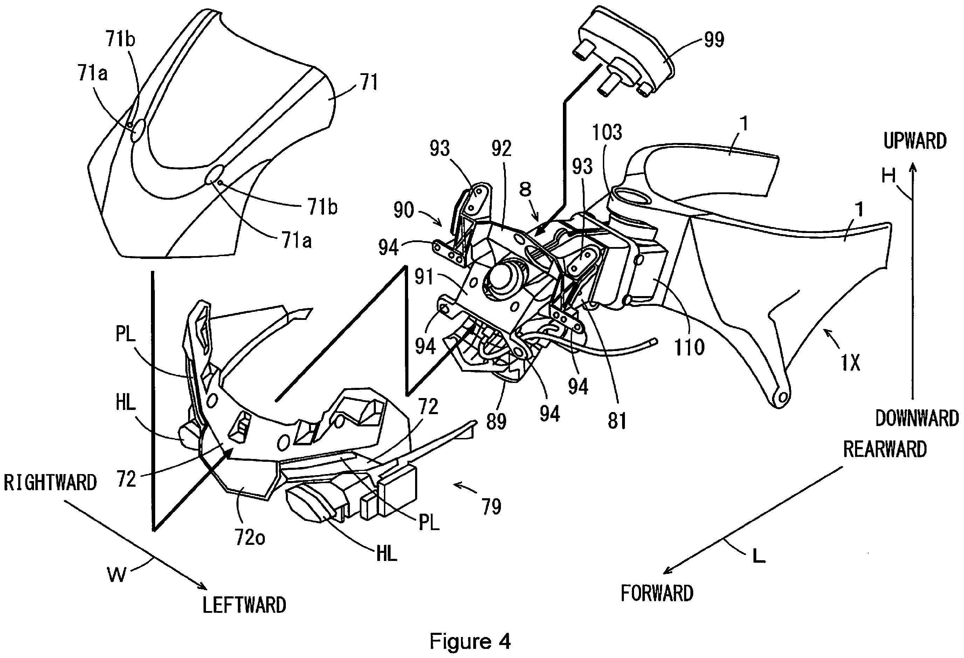

As shown in Figures 1 and 2, a body cover 7 is provided to cover the head pipe 103 from the front and part of the front fork FF from both sides. The body cover 7 includes a front cowl 71, an upper cowl 72, a pair of side cowls 73, namely left and right side cowls 73, and a head lamp cover 74 that is described below (see, e.g. Figure 4).

As shown in Figure 1, the front cowl 71 obliquely extends upward and rearward from a position in front of the head pipe 103. The upper cowl 72 is located below the front cowl 71, and supports the lower end of the front cowl 71. The pair of side cowls 73 is located below the upper cowl 72 and at positions further outward than the front fork FF.

An intake opening 72o is formed at the upper cowl 72. As shown in Figure 2, when the motorcycle 100 is viewed from the front, the intake opening 72o is located at the center in the width direction W of the motorcycle 100.

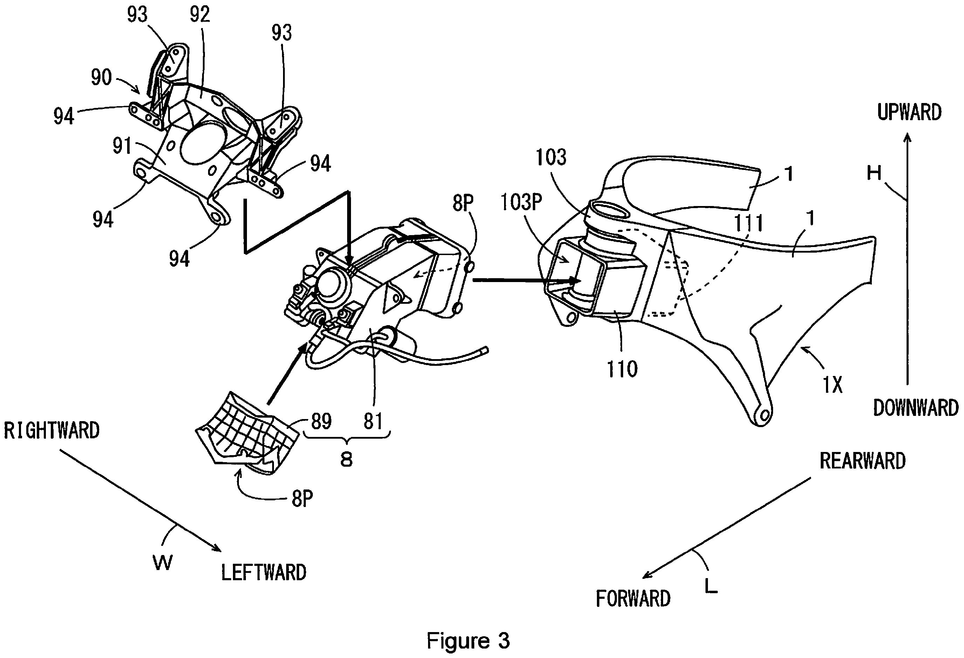

A tip end of the duct unit 8 shown in Figure 1 is connected to the intake opening 72o of the upper cowl 72 from behind. During the travelling of the motorcycle 100, the air flowing into the duct unit 8 through the intake opening 72o is led to the engine 3 through an intake passage 103P (see, e.g. Figure 3) that is described below, the air cleaner 112, the intake pipe and the throttle body (not shown).

As shown in Figures 1 and 2, a pair of mirror devices, namely left and right mirror devices 40, is provided at the front cowl 71 at positions substantially the same height as the upper end of the front fork FF. Each mirror device 40 of the pair of mirror devices 40 includes a mirror 41 directed rearward of the vehicle, and an indicator or flasher 42 directed forward of the vehicle.

A rider of the motorcycle 100 can view the area behind the motorcycle 100 by looking at each mirror 41 while driving. Further, the rider can switch between an unlit or non-operating state and a blinking or operating state of each indicator or flasher 42 by operating a handle switch provided at each of the pair of handles 30.

### Configuration of Front Portion of Motorcycle

Figures 3 to 7 are perspective views showing the assembly steps of the front portion of the motorcycle 100 of Figure 1. The attachment step of the front fork FF to the head pipe 103 will not be described below.

As shown in Figure 3, a square-tube intake guide 110 is attached to the front of the head pipe 103. The intake guide 110 is provided to open forward and rearward. Further, an intake guide 111 is attached to the back of the head pipe 103 to be connected to the intake guide 110. The intake passage 103P, which leads air rearward from the front of the head pipe 103, is formed by the intake guides 110, 111.

The duct unit 8 is connected to the intake guide 110, and an intake port of the air cleaner 112 shown Figure 1 is connected to the intake guide 111. Thus, air flowing into the duct unit 8 is smoothly led to the air cleaner 112 through the intake passage 103P.

As shown in Figure 3, the duct unit 8 includes an air guide member 81 and a duct tip end 89. The air guide member 81 is a tubular member having a rectangular cross section, which obliquely extends upward and forward, and further obliquely extends downward and forward. The duct tip end 89 is attached to the front end of the air guide member 81. A metal mesh may be provided at a front end opening of the air guide member 81. In this case, the metal mesh prevents foreign matter or particles from entering the inside of the air guide member 81.

The duct tip end 89 is a tubular member having a rectangular cross section, and obliquely extends downward and forward. The length in the front-and-rear direction L of the duct tip end 89 is shorter than the length in the front-and-rear direction L of the duct main body 81. For example, the air guide member 81 can be formed of a glass fiber-reinforced resin, and the duct tip end 89 can be formed of rubber.

An inner space of the air guide member 81 and a respective inner space of the duct tip end 89 function as intake passages 8P, which are used when air is led to the engine 3.

As described above, the rear end of the air guide member 81 is connected to the intake guide 110. A stay 90 is attached to the air guide member 81. The stay 90 supports the pair of mirror devices 40, and a meter unit 99 that is described below (see, e.g. Figure 4). In this manner, the duct unit 8 and the stay 90 are integrally fixed to the body frame 1X.

For example, the stay 90 can be formed of a glass fiber-reinforced resin. The stay 90 has a duct attachment portion 91, an upstanding portion 92, a pair of mirror device fixing portions 93, namely left and right mirror device fixing portions 93 and a plurality of (four in the present example) lamp fixing portions 94.

The duct attachment portion 91 is attached to the upper surface of the air guide member 81. The upstanding portion 92 projects upward from the rear end of the duct attachment portion 91. The left and right mirror device fixing portions 93 are located at the respective left and right side of the upstanding portion 92. Details of the stay 90 will be described below.

Two lamp fixing portions 94 are located at the respective left and right of the front end of the duct attachment portion 91. The other two lamp fixing portions 94 are located below the pair of mirror device fixing portions 93, respectively.

As shown in Figure 4, a lamp unit 79 is attached to the plurality of lamp fixing portions 94 of the stay 90. The lamp unit 79 includes the upper cowl 72, a pair of position lamps PL and a pair of head lamps HL.

The lower end of the front cowl 71 shown in Figure 1 is attached to the front end of the upper cowl 72. A pair of mirror fixing holes 71 a, namely left and right mirror fixing holes 71 a, and a pair of wiring holes 71 b, namely left and right wiring holes 71 b, are formed in the front cowl 71. The front cowl 71 is attached to the upper cowl 72, so that the left and right mirror fixing holes 71 a overlap with the respective left and right mirror device fixing portions 93 of the stay 90. Thus, the left and right mirror device fixing portions 93 is exposed on the upper surface of the front cowl 71.

The meter unit 99 is attached to the upstanding portion 92 of the stay 90 from behind. The meter unit 99 has a configuration, in which a speed meter and a tachometer, for example, can be stored in a casing.

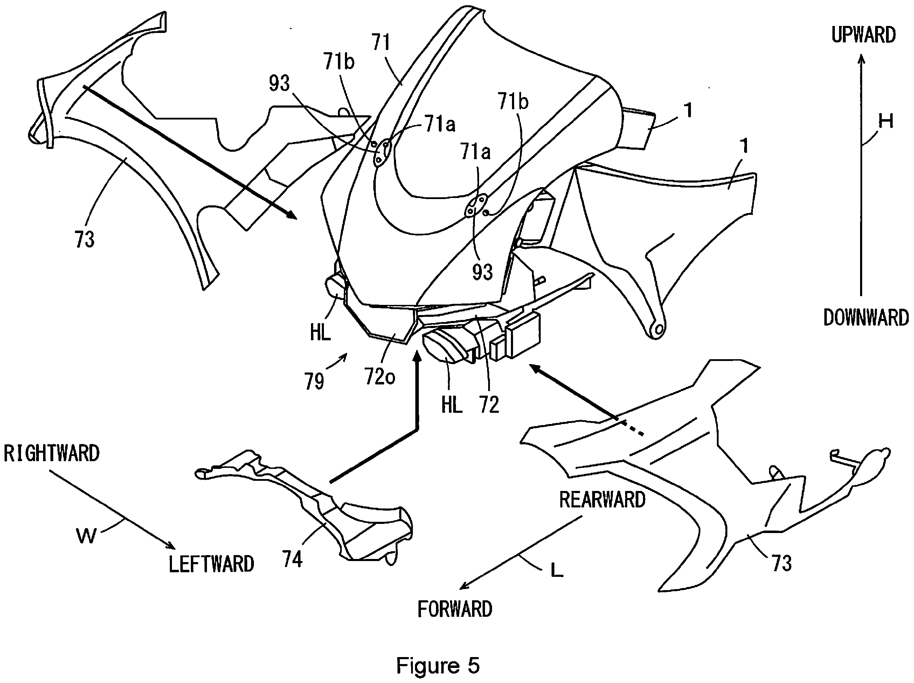

As shown in Figure 5, the side cowls 73 are attached to a respective right side portion and a respective left side portion of the upper cowl 72. Further, the head lamp cover 74 is attached to each of lower portions of the pair of head lamps HL to cover part of the lamp unit 79 from below.

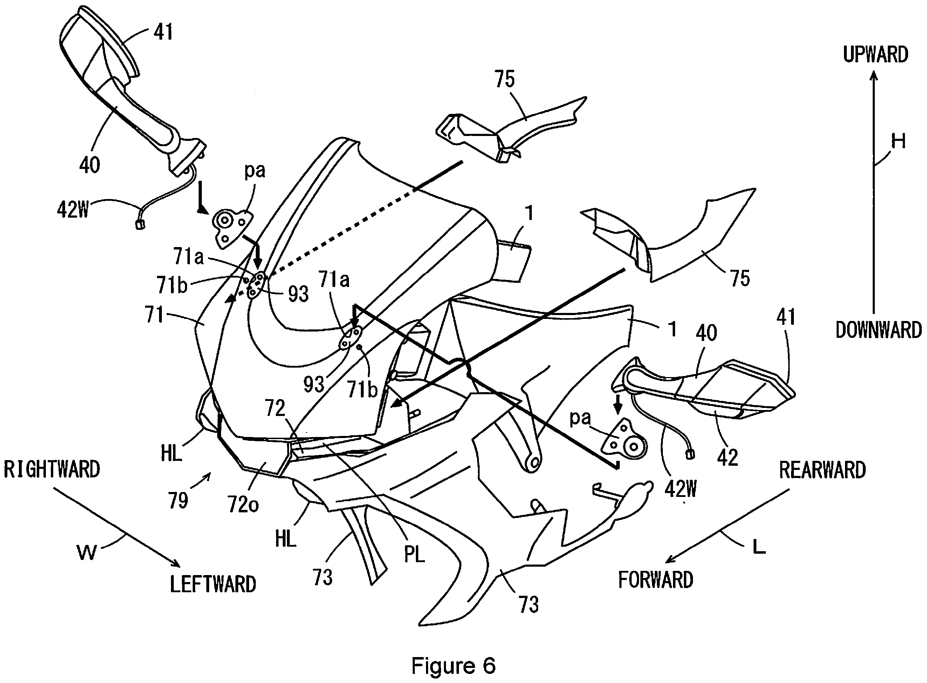

As shown in Figure 6, the left and right mirror devices 40 are attached to the respective left and right mirror device fixing portions 93, which are exposed through the mirror fixing holes 71 a of the front cowls 71 with packing members pa made of rubber being sandwiched therebetween. At this time, wiring 42W, which extends from the lower end of each mirror device 40, of the indicator or flasher 42 is put through each wiring hole 71 b of the front cowl 71.

Further, in the present example, a pair of inner covers 75 is attached to left and right outer side portions in the width direction W of the upper cowl 72 to cover at least part of the pair of position lamps PL from behind.

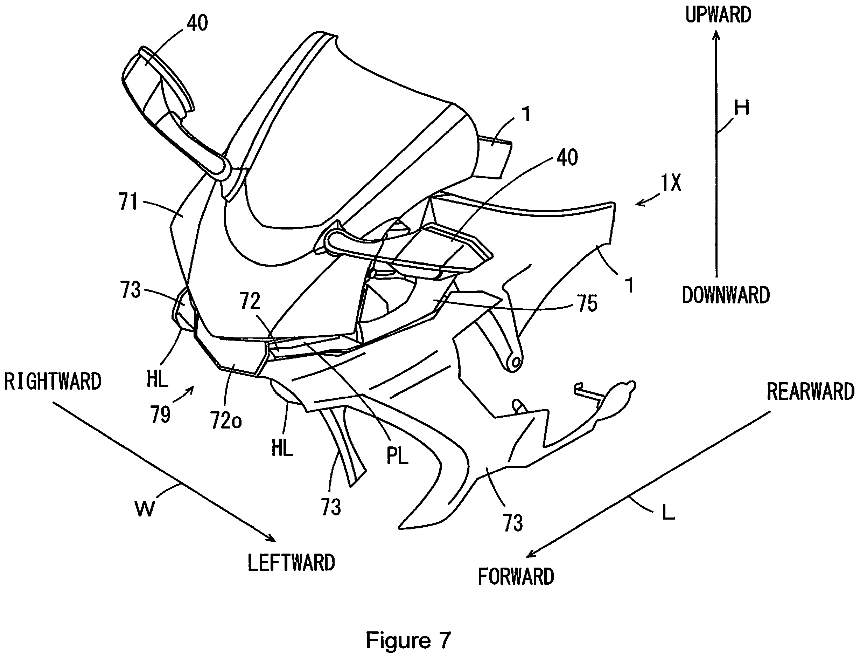

The front portion of the motorcycle 100 is assembled as described above. Thus, as shown in Figure 7, each of constituent elements, which constitutes or is included in the front portion of the motorcycle 100, is fixed to the body frame 1X.

### Duct Main Body

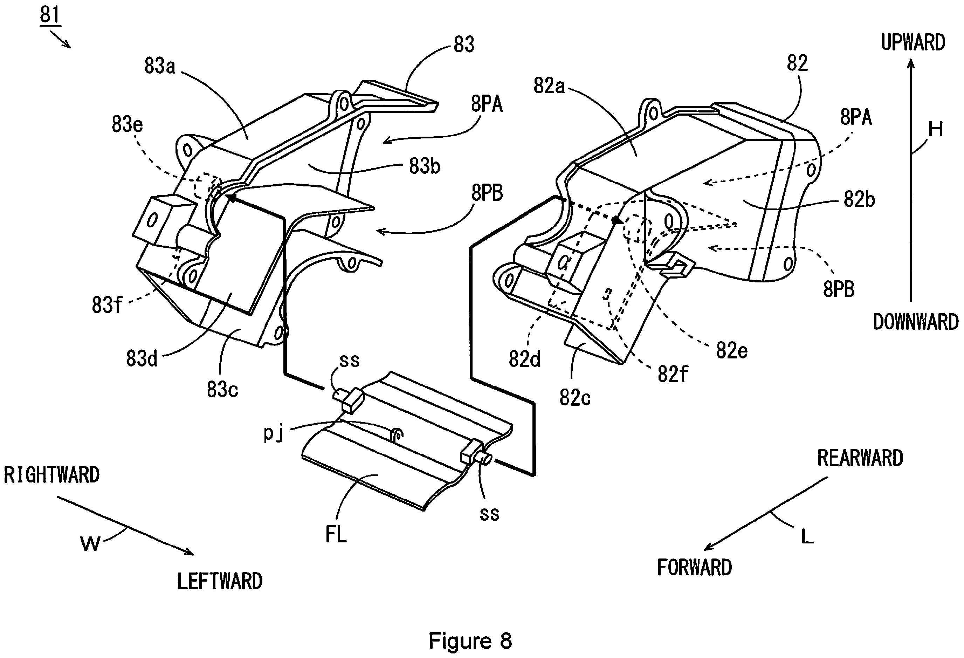

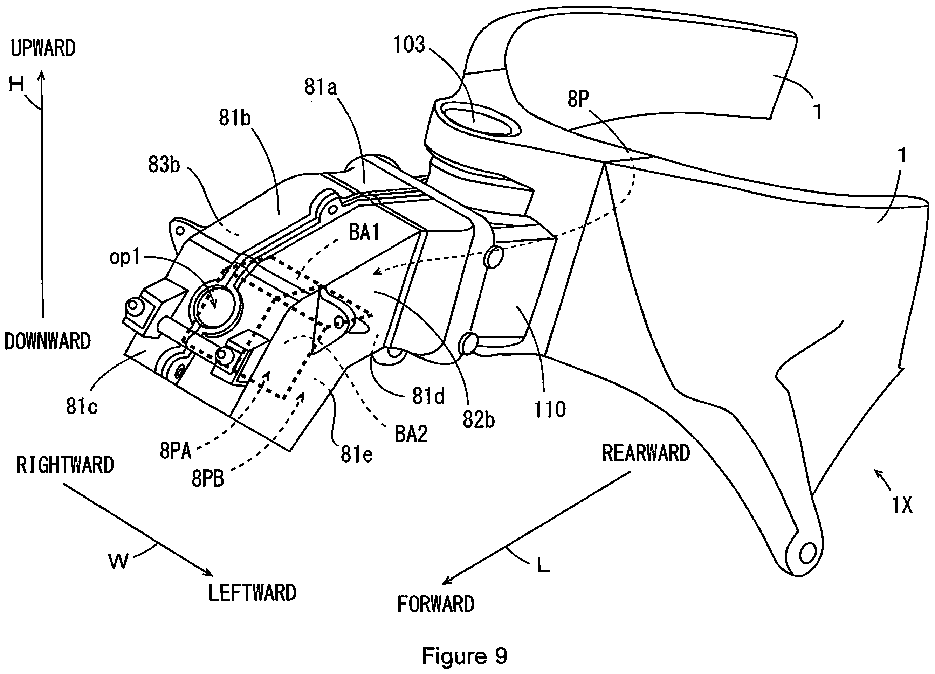

Figure 8 is an exploded perspective view of the air guide member 81 shown in Figure 3, and Figure 9 is an external perspective view showing the air guide member 81 shown in Figure 8 being attached to the intake guide 110 shown in Figure 3. As shown in Figure 8, the air guide member 81 of the present example is formed by coupling of a pair of passage forming members 82, 83, namely left and right forming members 82, 83, to each other.

The left passage forming member 82 has an upper surface portion 82a, a side surface portion 82b, a bottom surface portion 82c, a partition wall 82d, a flap supporter 82e and a rotation blocker 82f. The partition wall 82d is located between the upper surface portion 82a and the bottom surface portion 82c. The flap supporter 82e and the rotation blocker 82f are formed on portions inside of the side surface portion 82b between the upper surface portion 82a and the partition wall 82d. The rotation blocker 82f is located at a position further forward than the flap supporter 82e.

The right passage forming member 83 has an upper surface portion 83a, a side surface portion 83b, a bottom surface portion 83c, a partition wall 83d, a flap supporter 83e and a rotation blocker 83f. The partition wall 83d is located between the upper surface portion 83a and the bottom surface portion 83c. The flap supporter 83e and the rotation blocker 83f are formed on portions inside of the side surface portion 83b between the upper surface portion 83a and the partition wall 83d. The rotation blocker 83f is located at a position further forward than the flap supporter 83e.

The upper surface portions 82a, 83a shown Figure 8 are coupled to each other such that a rear upper surface portion 81 a, a central upper surface portion 81 b and a front upper surface portion 81 c, which are arranged in the front-and-rear direction L, are formed, as shown in Figure 9. Further, a circular opening op1 is formed at the front upper surface portion 81 c. With the duct main body 81 being attached to the intake guide 110, the rear upper surface portion 81 a obliquely extends upward and forward from the head pipe 103. Further, the central upper surface portion 81 b substantially horizontally extends forward from the front end of the rear upper surface portion 81 a. Further, the front upper surface portion 81 c obliquely extends downward and forward from the front end of the central upper surface portion 81 b.

The bottom surface portions 82c, 83c shown in Figure 8 are coupled to each other such that a rear bottom surface portion 81 d and a front bottom surface portion 81 e, which are arranged in the front-and-rear direction L, are formed, as shown in Figure 9. With the duct main body 81 being attached to the intake guide 110, the rear upper surface portion 81d obliquely extends upward and forward from the head pipe 103. Further, the front bottom surface portion 81 e obliquely extends downward and forward from the front end of the rear bottom surface portion 81 d.

The partition walls 82d, 83d shown in Figure 8 are coupled to each other such that a rear partition wall BA1 and a front partition wall BA2, which are arranged in the front-and-rear direction L, are formed, as shown in Figure 9. With the air guide member 81 being attached to the head pipe 103, the rear partition wall BA1 obliquely extends upward and forward. Further, the front partition wall BA2 obliquely extends downward and forward from the front end of the rear partition wall BA1. Inside of the air guide member 81, part of the intake passage 8P is partitioned or separated into two intake passages, which are arranged in the top-and-bottom direction by the rear partition wall BA1 and the front partition wall BA2. In the following description, an upper intake passage partitioned by the rear partition wall BA1 and the front partition wall BA2 is referred to as an upper passage 8PA, and a lower intake passage is referred to as a lower passage 8PB.

As shown in Figure 8, in the present example a flap FL is provided inside of the air guide member 81. Rotation shafts ss, which project in the width direction W, are formed at the center on the right side and the center on the respective left side of the flap FL. Further, a driving projection pj is formed on the central portion of the flap FL at a position further forward than the rotation shafts ss.

As indicated by the thick arrow in Figure 8, at the time of coupling the pair of passage forming members 82, 83 to each other, one rotation shaft ss of the flap FL is rotatably or pivotably attached to the flap supporter 82e of the passage forming member 82. Further, the other rotation shaft ss of the flap FL is rotatably or pivotably attached to the flap supporter 83e of the passage forming member 83.

Thus, the flap FL is rotatably or pivotably supported about an axis parallel to the width direction W in the upper passage 8PA of the air guide member 81. The upper passage 8PA is opened by the rotation of the flap FL in one or a first direction, and the upper passage 8PA is closed by the rotation of the flap FL in an opposite or second direction.

The rotation blockers 82f, 83f block rotation of the flap FL in the one or first direction by not less than a constant angle when the upper passage 8PA is opened. Thus, an open state of the upper passage 8PA is maintained as described below.

### Plurality of Devices Provided at Duct Main Body

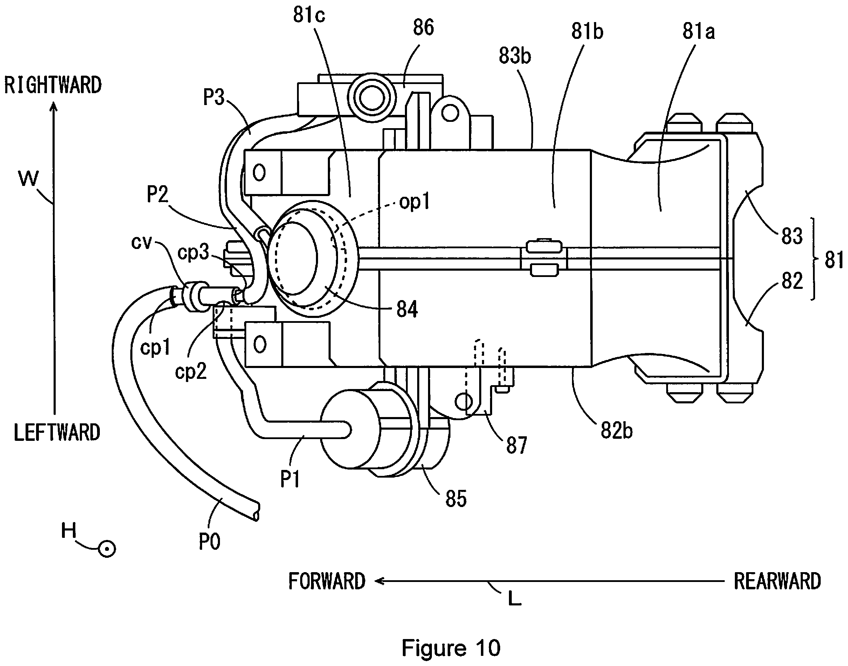

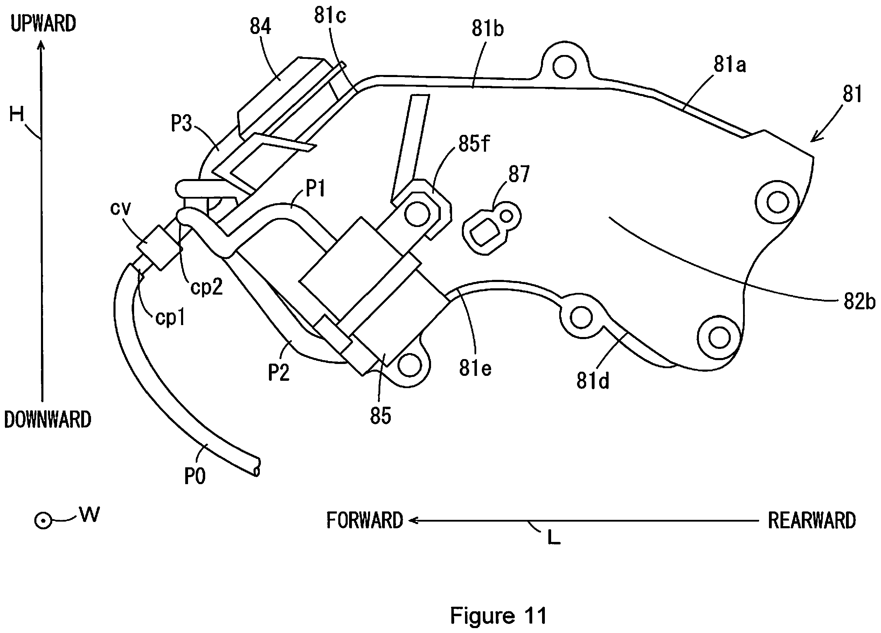

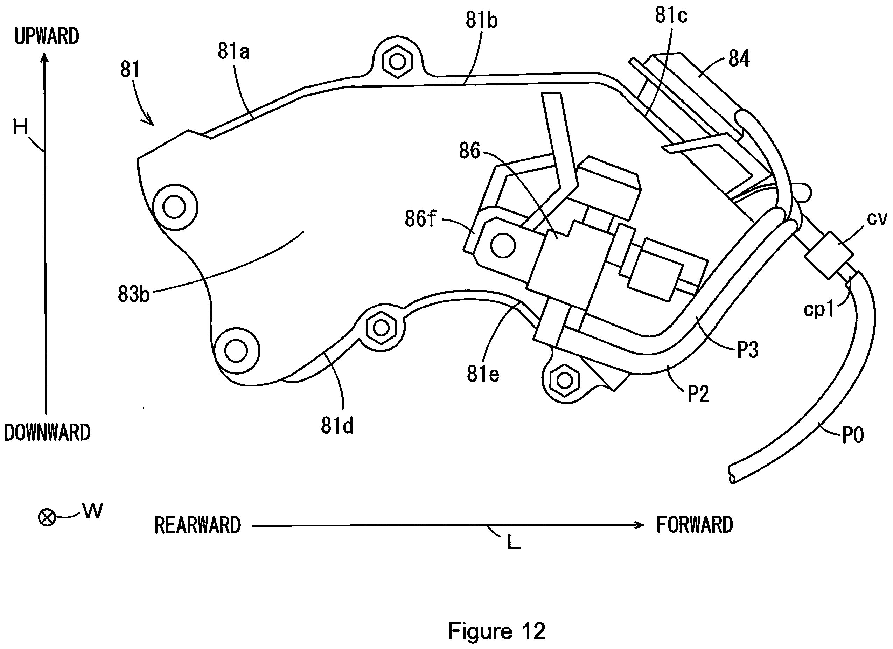

A plurality of devices, which are used when the flap FL is driven, are attached to the duct main body 81. Figure 10 is a plan view showing the plurality of devices attached to the air guide member 81, which are used when the flap FL is driven. Figure 11 is a side view of one side of the air guide member 81 shown in Figure 10 as viewed from a position further leftward than the vehicle, and Figure 12 is a side view of the other side of the air guide member 81 shown in Figure 10 as viewed from a position further rightward than the vehicle.

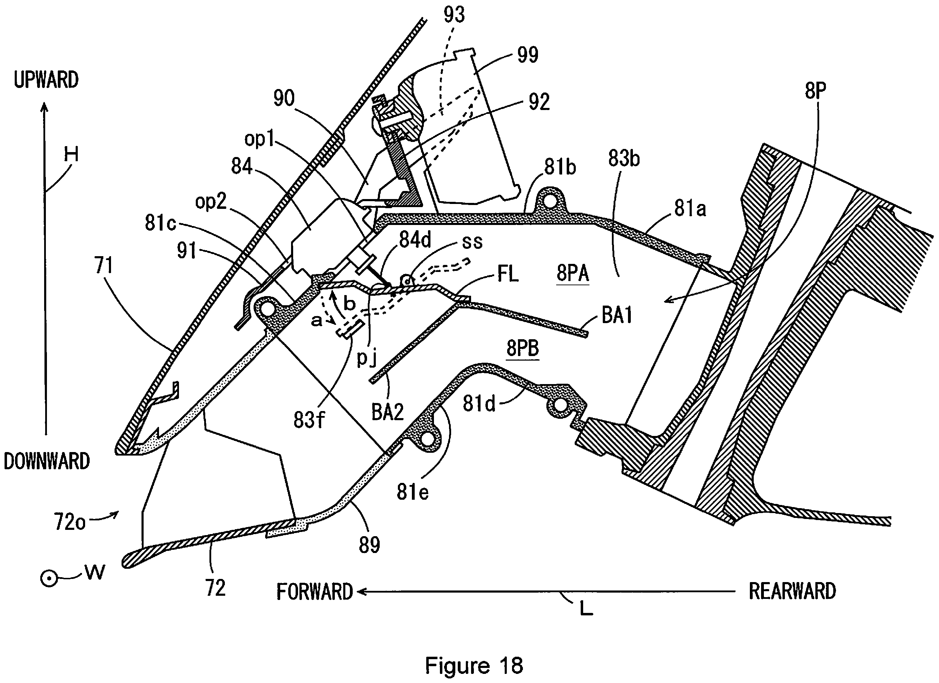

As shown in Figure 10, a flap open/close device 84 is provided on the front upper surface portion 81c of the air guide member 81 to cover the opening op1. Part of the flap open/close device 84 is sandwiched between the upper surface portion 82a of the passage forming member 82 (see, e.g. Figure 8) and the upper surface portion 83a of the passage forming member 83 (see, e.g. Figure 8). The flap open/close device 84 is a substantially columnar actuator. For example, the flap open/close device 84 can include a suction chamber, a diaphragm, and a coupling member 84d, which are described below (see, e.g. Figure 18).

In the flap open/close device 84, the diaphragm is deformed due to a change in pressure in the suction chamber, and the coupling member 84d (see, e.g. Figure 18) operates according to the deformation of the diaphragm. Thus, the flap FL shown in Figure 8 is rotated, so that the upper passage 8PA of Figure 9 is opened or closed.

As shown in Figure 11, a surge tank 85, which accumulates intake pressure of the engine 3 shown in Figure 1, is provided at the side surface portion 82b of the air guide member 81 directed leftward. A fixing portion 85f is formed on the side surface portion 82b. The surge tank 85 is fixed or attached to the fixing portion 85f of the side surface portion 82b by a screw or other fixing means.

As shown in Figure 12, a solenoid valve 86 is provided at the side surface portion 83b of the air guide member 81 directed rightward. Details of the solenoid valve 86 will be described below. A fixing portion 86f is formed on the side surface portion 83b. The solenoid valve 86 is fixed or attached to the fixing portion 86f of the side surface portion 83b by a screw or other fixing means.

As shown in Figure 10, a check valve cv is provided at the front end of the front upper surface portion 81c of the air guide member 81. The check valve cv has an outflow port cp1 and two inflow ports cp2, cp3. The two inflow ports cp2, cp3 communicate with each other.

A pipe P0 is provided to connect the outflow port cp1 to the intake passage of the engine 3. A pipe P1 is provided to connect the inflow port cp2 to the surge tank 85. A pipe P2 is provided to connect the inflow port cp3 to the solenoid valve 86. A pipe P3 is provided to connect the solenoid valve 86 to the flap open/close device 84.

In the above-mentioned configuration, when the intake pressure of the engine 3 (the pressure in the intake passage) first becomes lower than atmospheric pressure, the air in the surge tank 85 is sucked into the intake passage of the engine 3. Thus, the pressure in the surge tank 85 becomes or has a negative pressure.

Thereafter, when the pressure in the intake passage of the engine 3 becomes higher than the pressure in the surge tank 85, the air in the intake passage is prevented from flowing out to the inside of the surge tank 85 by the check valve cv. Thus, the pressure in the surge tank 85 is maintained at the negative pressure. In this manner, the intake pressure of the engine 3 is accumulated in the surge tank 85.

The solenoid valve 86 of the present example is a three-way valve that is controlled by an ECU (Electronic Control Unit) (not shown) of the motorcycle 100. Based on the control of the ECU, the solenoid valve 86 lets or allows an inner space of the pipe P2 and an inner space of the pipe P3 to communicate with each other. In this case, the intake pressure accumulated by the surge tank 85 is led to the flap open/close device 84 through the pipes P1, P2, P3. Thus, the inside of the suction chamber of the flap open/close device 84 becomes or has a negative pressure.

Further, based on the control of the ECU, the solenoid valve 86 opens the inner space of the pipe P3 to the atmospheric pressure. In this case, the atmospheric pressure is led to the flap open/close device 84 through the pipe P3. Thus, the inside of the suction chamber of the flap open/close device 84 becomes or has an atmospheric pressure.

As described above, since the flap open/close device 84 is provided on the front upper surface portion 81c that is inclined downward of the air guide member 81, the flap open/close device 84 can be provided at a lower portion on the air guide member 81. Thus, a center of gravity of the front portion of the vehicle is lowered, and flexibility in design of aerodynamic characteristics of the front portion of the vehicle is improved.

Further, the above-mentioned configuration causes the surge tank 85 to be attached to or provided at the side surface portion 82b, and the solenoid valve 86 to be attached to the side surface portion 83b. In this manner, since neither the surge tank 85 nor the solenoid valve 86 is arranged on the duct main body 81, the center of gravity of the front portion of the vehicle is lowered. Further, the shape of the front portion of the vehicle above the duct main body 81 is not limited by the surge tank 85 and the solenoid valve 86. Thus, flexibility in design of aerodynamics characteristics of the front portion of the vehicle is improved. Further, since the surge tank 85 and the solenoid valve 86 are provided on respective sides of the duct main body 81 weight balance between the right and left portions of the front portion of the vehicle is maintained.

As shown in Figures 10 and 11, a temperature sensor 87 is provided on the side surface portion 82b of the air guide member 81 in addition to the surge tank 85. The temperature sensor 87 has a bar-shaped temperature detector, and detects temperature of air that is led to the engine 3 (an intake temperature). A through-hole, which is used when the temperature detector of the temperature sensor 87 is inserted into the lower passage 8PB shown in Figure 9, is formed at the side surface portion 82b.

With the temperature detector of the temperature sensor 87 being inserted into the through hole, the temperature sensor 87 is fixed or attached to the side surface portion 82b by a screw or other fixing means. In the passage forming member 82 of the present example, a screw receiver, which receives the screw that is used when the temperature sensor 87 is fixed or attached, is formed in the partition wall 82d. In this case, it is not necessary to form the screw receiver at a position spaced apart from the partition wall 82d inside of the passage forming member 82. Thus, a flow of air in the intake passage 8P is not blocked by the screw receiver.

For example, in the ECU of the motorcycle 100, a table showing a relation between the intake temperature and an air-fuel ratio, can be stored in advance. The ECU controls an injector (not shown) based on the table stored in advance and the intake temperature detected by the temperature sensor 87. Thus, an air-fuel mixture is produced at an appropriate air-fuel ratio corresponding to the intake temperature.

As described above, since the temperature sensor 87 is provided at the side surface portion 82b of the air guide member 81, the temperature sensor 87 can detect the intake temperature without being affected by the heat generated from the engine 3. Further, the shape of the front portion of the vehicle above the air guide member 81 is not limited by the temperature sensor 87.

### Configuration of Stay and Duct and Their Effects

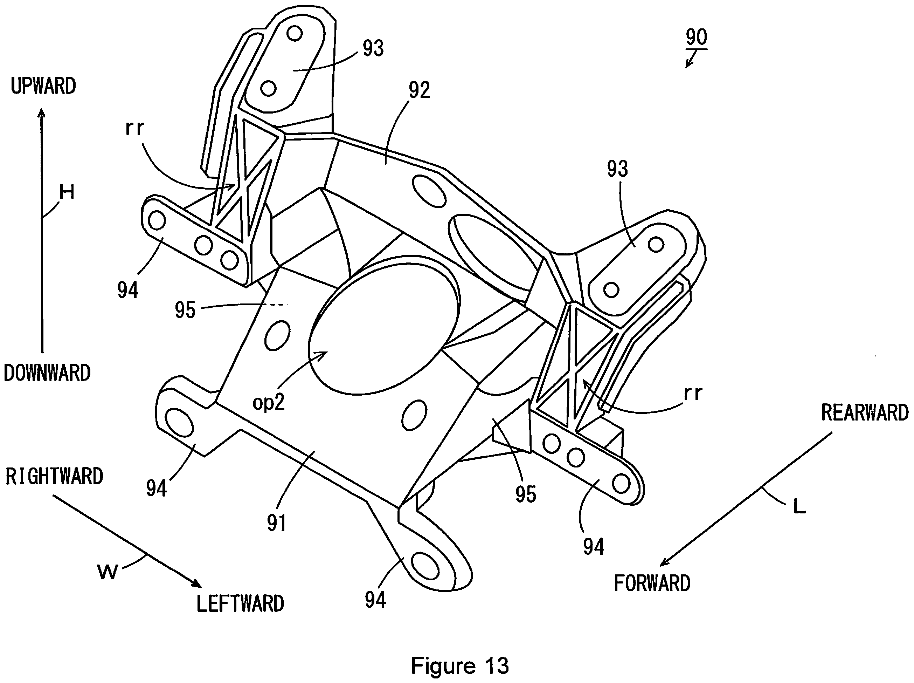

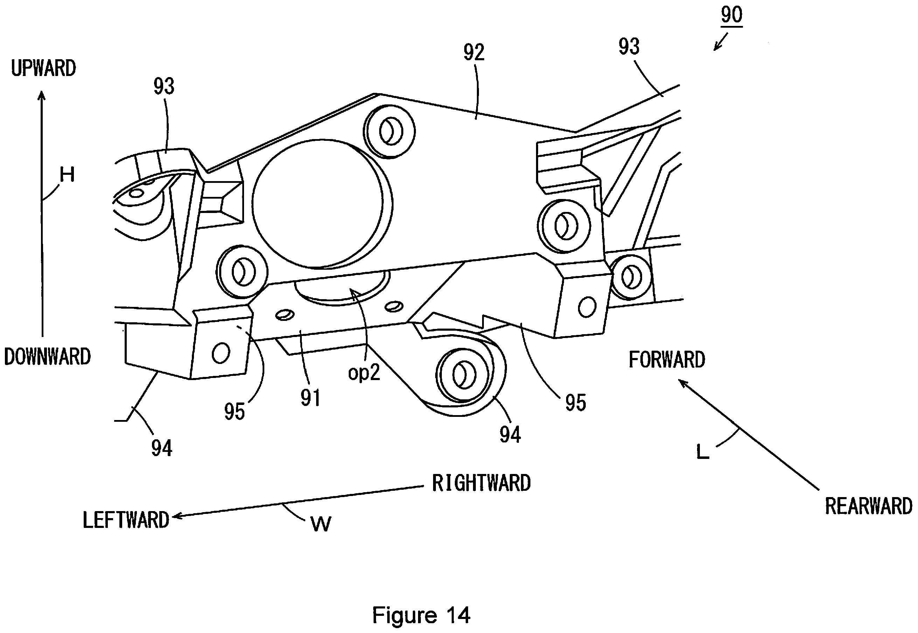

Figure 13 is an external perspective view of the stay 90 shown in Figure 3 as obliquely viewed rearward from above, and Figure 14 is a partial external perspective view of the stay 90 of Figure 3 as obliquely viewed forward from below. As shown in Figures 13 and 14, the stay 90 has a pair of side surface holding portions 95, namely left and right side surface holding portions 95, in addition to the above-mentioned duct attachment portion 91, the up-standing portion 92, the pair of mirror device fixing portions 93 and the plurality of lamp fixing portions 94.

The pair of side surface holding portions 95 is formed so as to be opposite to each other in the width direction W, and to extend downward from a right side portion and a left side portion of the duct attachment portion 91. An opening op2, which is larger than the flap open/close device 84 shown in Figure 10, is formed at a central portion of the duct attachment portion 91.

As shown in Figure 13, in the stay 90 of the present example, reinforcement portions rr are formed to extend downward from the lower ends of the respective left and right mirror device fixing portions 93. Each reinforcement portion rr is constituted by or includes a plurality of ribs. Thus, in the reinforcement portion rr, high rigidity can be achieved without an increase in thickness of the stay 90. In this manner, each mirror device fixing portion 93 is coupled to the duct attachment portion 91 and the side surface holding portion 95 by the reinforcement portion rr, which is light and has high rigidity.

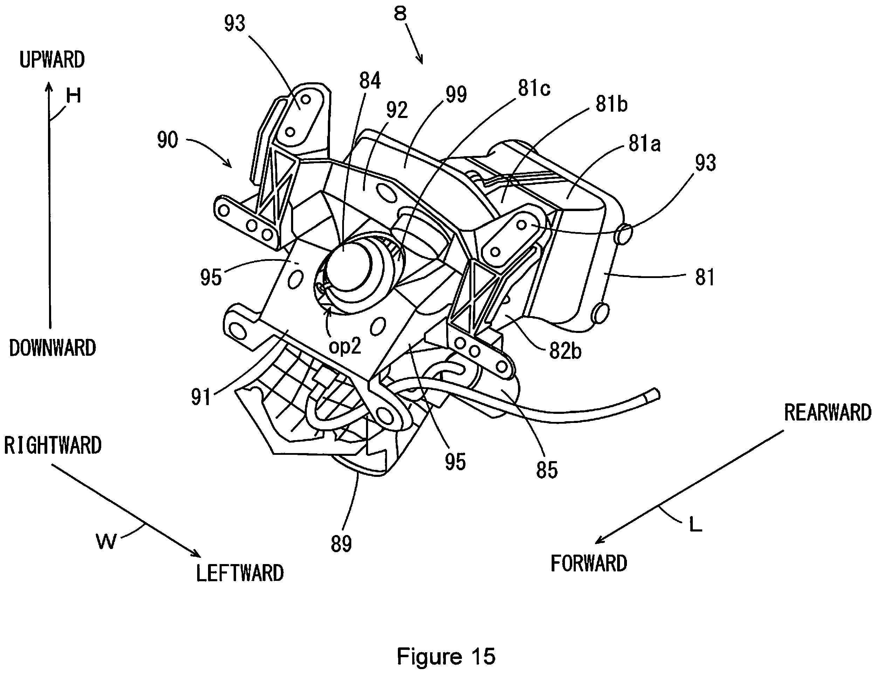

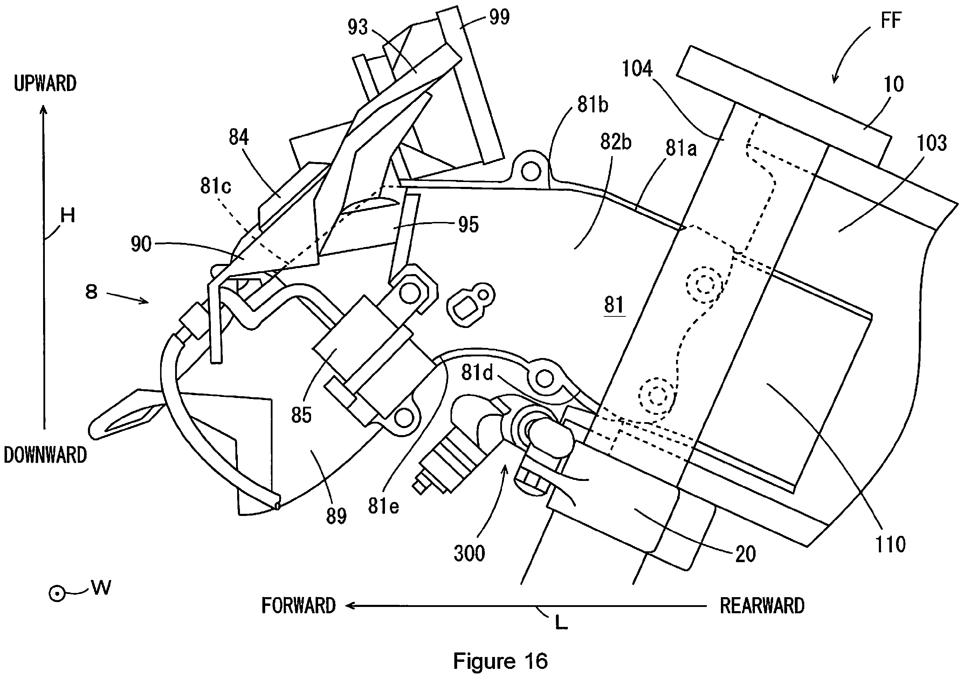

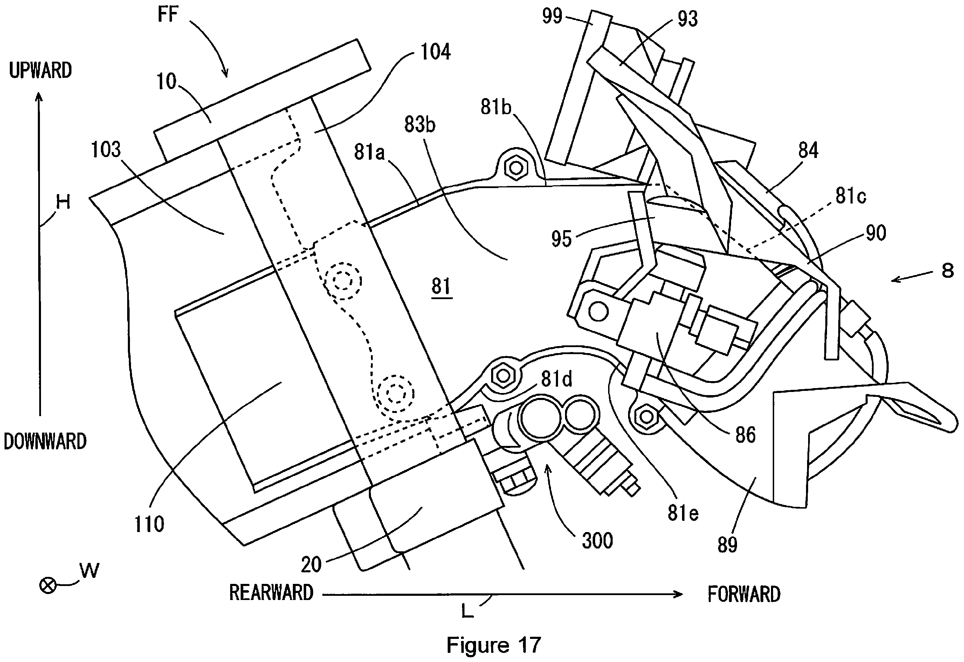

Figure 15 is an external perspective view showing the plurality of devices and members attached to the air guide member 81. Figure 16 is a side view of one side of the air guide member 81 shown in Figure 15 as viewed from a position further leftward than the vehicle, and Figure 17 is a side view of the other side of the air guide member 81 shown in Figure 15 as viewed from a position further rightward than the vehicle. In Figures 16 and 17, the front fork FF shown in Figure 1 is shown together with the air guide member 81 shown Figure 15.

Firstly, the configuration of the front fork FF of the present example will be described. As shown in Figures 16 and 17, the front fork FF of the present example includes an upper bracket 10, an under bracket 20 and a pair of fork tubes 104, namely left and right fork tubes 104.

The upper bracket 10 is a metallic flat-plate shaped member, and is attached to the upper end of the head pipe 103 to be rotatable about or relative to the head pipe 103. The pair of handles 30 shown in Figures 1 and 2 is provided at the upper bracket 10. The under bracket 20 is attached to the lower end of the head pipe 103 to be rotatable about or relative to the head pipe 103.

As shown in Figures 16 and 17, the left and right fork tubes 104 are arranged to obliquely extend downward and forward and be parallel to each other. The upper bracket 10 couples the upper ends of the left and right fork tubes 104 to each other. The under bracket 20 couples the left and right fork tubes 104 at a position further downward than the upper bracket 10. Thus, a rectangular space surrounded by the upper bracket 10, the under bracket 20 and the left and right fork tubes 104 is formed. The left and right fork tubes 104 are located at a position further outward in the width direction W and further forward in the front-and-rear direction L than the head pipe 103. The steering damper 300 is attached to the under bracket 20. The steering damper 300 is located in front of the under bracket 20.

The duct unit 8 extends forward from the head pipe 103 to pass through the rectangular space that is surrounded by the upper bracket 10, the under bracket 20 and the left and right fork tubes 104.

As shown in Figure 15, the duct attachment portion 91 of the stay 90 is located on the front upper surface portion 81c of the air guide member 81. The front upper surface portion 81 c is inclined downward. Thus, the stay 90 can be provided at a lower position on the air guide member 81. Further, the flap open/close device 84 attached to the air guide member 81 is arranged in the opening op2 of the duct attachment portion 91. In this case, the flap open/close device 84 and the duct attachment portion 91 of the stay 90 do not overlap with each other on the air guide member 81. Thus, the center of gravity in the front portion of the vehicle is lowered. Further, flexibility in design of the aerodynamic characteristics of the front portion of the vehicle is improved.

Further, in the present example, as shown in Figure 16, the left side surface holding portion 95 of the stay 90 abuts against the side surface portion 82b of the left passage forming member 82. Further, as shown in Figure 17, the right side surface holding portion 95 of the stay 90 abuts against the side surface portion 83b of the right passage forming member 83. In this manner, as shown in Figure 15, the both side surface portions 82b, 83b of the air guide member 81 are sandwiched from the outside between the pair of side surface holding portions 95.

Thus, a coupled state of the pair of passage forming members 82, 83, in which the passage forming members 82, 83 are coupled to each other, is maintained. Therefore, generation of the gap between the pair of passage forming members 82, 83 is prevented by the weight of the surge tank 85 that is provided or attached to or on the left side surface portion 82b and the solenoid value 86 that is provided or attached to or on the right side surface portion 83b.

Further, in the stay 90 of the present example, the left and right mirror devices 40 shown in Figure 1 are attached to the respective left and right mirror device fixing portions 93. The meter unit 99 is attached to the upstanding portion 92. In this manner, the stay 90 has a function of maintaining the pair of passage forming members 82, 83 in the coupled state, and a function of supporting pair of mirror devices 40 and the meter unit 99. Thus, it is not necessary to individually or separately prepare or provide a member that is used to maintain the coupled state of the pair of passage forming members 82, 83, a member that is used to support the pair of mirror devices 40 and a member that is used to support the meter unit 99. Therefore, an increase in the number of components is inhibited or prevented.

As shown in Figures 16 and 17, the duct unit 8 passes between the left and right fork tubes 104 and between the upper bracket 10 and the under bracket 20 forward, and extends to a position above the steering damper 300. Further, the duct unit 8 further extends forward from the position above the steering damper 300 to a position further forward and downward than the steering damper 300. Thus, moisture of rain water, mud water and the like is unlikely to flow into the engine 3.

In the present embodiment, the stay 90 is separately fabricated from the air guide member 81. In this case, flexibility in shape or design of the stay 90 is increased. Thus, the above-mentioned reinforcement portions rr can be formed at the stay 90. Each reinforcement portion rr is formed to support each mirror device fixing portion 93. Further, as described above, high rigidity can be achieved without an increase in thickness in the reinforcement portions rr. Therefore, the weight of the front portion of the vehicle can be reduced while rigidity required to support each mirror device 40 is achieved.

### Operation of Flap

Figure 18 is a longitudinal cross sectional view of the front portion of the motorcycle 100 taken along the line Q-Q of Figure 2. In Figure 18, the front fork FF and the steering damper 300 are not shown. As shown in Figure 18, the flap FL is rotatably or pivotably supported between the front upper surface portion 81 c and the front partition wall BA2 in the upper passage 8PA inside of the air guide member 81 by the rotation shafts ss.

The coupling member 84d of the flap open/close device 84 is a metallic bar-shaped member, which obliquely extends downward from the opening op1 of the front upper surface portion 81 c, and is connected to the driving projection pj of the flap FL. In the flap open/close device 84, the pressure in the suction chamber (not shown) changes from a negative pressure to an atmospheric pressure, whereby the coupling member 84d is obliquely depressed downward. In this case, as indicated by the dotted arrow "a" in Figure 18, the flap FL is rotated in the one or first direction, and portions in the vicinity of the front end of the flap FL abut against the rotation blockers 82f, 83f shown in Figure 8. Thus, when the flap FL is substantially parallel to the front partition wall BA2, the rotation of the flap FL in the one or first direction is blocked. In this state, the upper passage 8PA is opened.

On the other hand, in the flap open/close device 84 of the present example, the pressure in the suction chamber (not shown) changes from an atmospheric pressure to a negative pressure, whereby the coupling member 84d is obliquely pulled upward. In this case, as indicated by the solid arrow "b" in Figure 18, the flap FL is rotated in an opposite or second direction, whereby the front end of the flap FL abuts against the front upper surface portion 81 c, and the rear end of the flap FL abuts against the front end of the rear partition wall BA1. Thus, when the flap FL is inclined with respect to the front partition wall BA2, the rotation of the flap FL in the opposite or second direction is blocked. In this state, the upper passage 8PA is closed.

For example, when a travelling speed of the motorcycle 100 or a rotational speed of the engine 3 exceeds a specific threshold value, the flap FL in the air guide member 81 can be rotated in the one or first direction, and the upper passage 8PA is opened. In this case, the air flowing into the intake passage 8P from the intake opening 72o of the vehicle front end is supplied to the engine 3 through the upper passage 8PA and the lower passage 8PB. Thus, a high supercharging effect can be achieved.

On the other hand, when the traveling speed of the motorcycle 100 or the rotational speed of the engine 3 is not more than or below the specific threshold value, the flap FL in the air guide member 81 can be rotated in the opposite or second direction, and the upper passage 8PA is closed. In this case, the air flowing into the intake passage 8P from the intake opening 72o of the vehicle front end is supplied to the engine 3 through the lower passage 8PB. Thus, the supercharging effect can be achieved, and noise that is transmitted or leaks to the outside from the engine 3 through the intake passage 8P is reduced.

In particular, in the air guide member 81 of the present example, the intake passage 8P is partitioned or separated into an upper section and a lower section by the rear partition wall BA1 and the front partition wall BA2. The rear partition wall BA1 obliquely extends upward and forward, and the front partition wall BA2 obliquely extends downward and forward. In this case, the passage through which the noise generated by the engine 3 passes has a curved portion, and the length of the passage is sufficiently ensured. Thus, an attenuation effect of noise that is transmitted or leaks to the outside from the engine 3 through the intake passage 8P is achieved.

Further, in the air guide member 81 of the present example, the upper passage 8PA of the air guide member 81 is designed to have a cross sectional area, which is larger than that of the lower passage 8PB. Thus, when the upper passage 8PA is closed by the flap FL, noise that is transmitted or leaks to the outside from the engine 3 through the intake passage 8P is sufficiently reduced.

### Configuration of Coupling Portions of Pair of Passage Forming Members

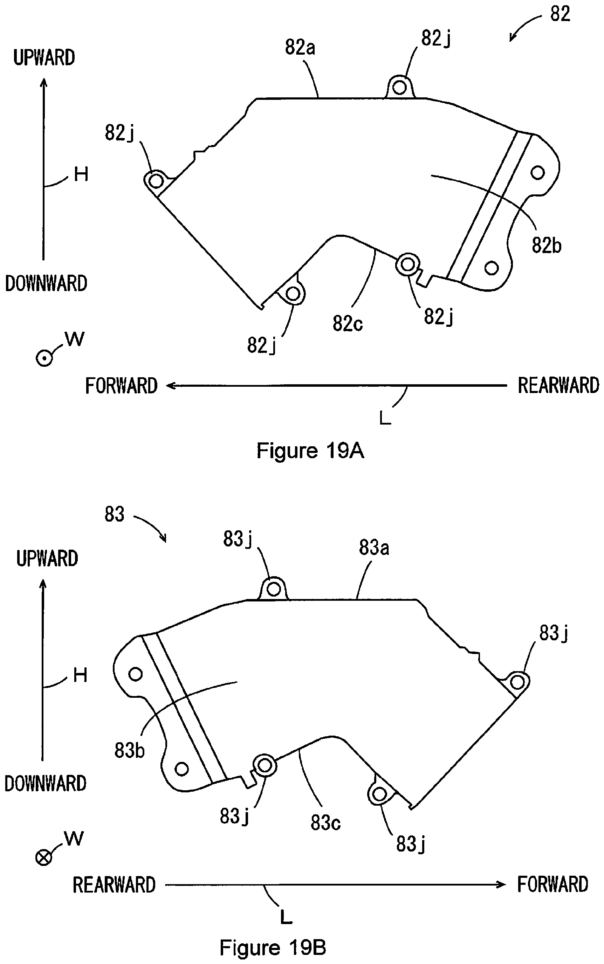

Figures 19A and 19B are side views of the passage forming members 82, 83 shown in Figure 8. Figure 19A shows a side view of the passage forming member 82 as viewed from a position further leftward than the vehicle. Figure 19B shows a side view of the passage forming member 83 as viewed from a position further rightward than the vehicle.

As shown in Figure 19A, a plurality of (two in the present example) coupling portions 82j are formed on each of the upper surface portion 82a and the bottom surface portion 82c in the passage forming member 82. As shown in Figure 19B, a plurality of (two in the present example) coupling portions 83j are formed on each of the upper surface portion 83a and the bottom surface portion 83c in the passage forming member 83. Each coupling portion 82j, 83j has a through-hole that opens rightward and leftward.

When the four coupling portions 82j of the left passage forming member 82 overlap with the respective four coupling portions 83j of the right passage forming members 83, bolts or other fixing means are inserted into the through-holes of the respective coupling portions 82j, 83j. A nut is attached or secured to each bolt. Thus, the passage forming members 82, 83 are coupled to each other.

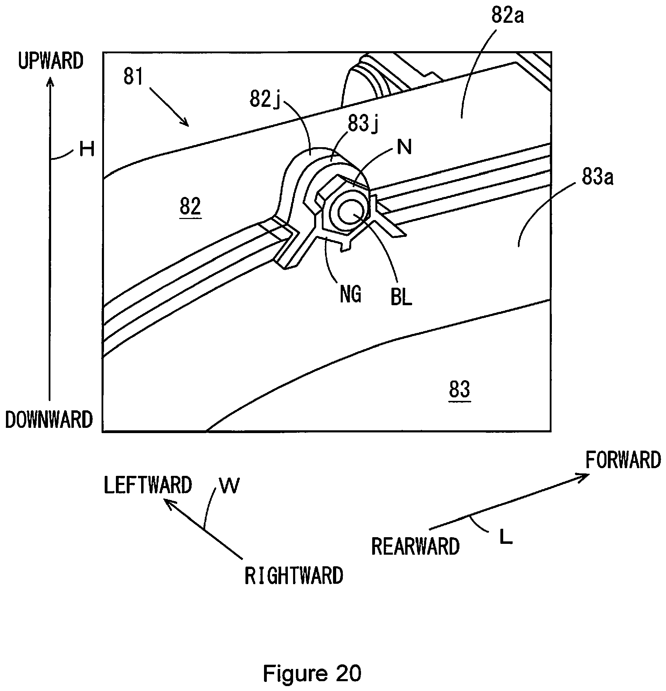

Figure 20 is an external perspective view showing the coupled state of the coupling portion 82j to the coupling portion 83j shown in Figures 19A and 19B. Figure 20 shows the coupled state of the coupling portion 82j that is formed on the upper surface portion 82a of the passage forming member 82 to the coupling portion 83j that is formed on the upper surface portion 83a of the passage forming member 83.

As shown in Figure 20, a nut holding portion NG in which part of the nut N can be stored, is formed at the coupling portion 83j of the right passage forming member 83. In this case, when the nut N is fitted into the nut holding portion NG, a worker can easily fit the bolt BL into the nut N. Thus, assembly of the duct main body 81 becomes easier or facilitated.

### Effects

In the motorcycle 100 according to the present embodiment, the air guide member 81 is formed by coupling of the left and right passage forming members 82, 83 to each other. The duct attachment portion 91 of the stay 90 is attached to or provided at the upper surface of the air guide member 81. At this time, inner portions of the left and right side surface holding portions 95 of the stay 90 abut against the respective left and right side surface portions 82b, 83b of the air guide member 81.

In this case, since the left and right side portions 82b, 83b of the duct main body 81 are sandwiched between the pair of side surface holding portions 95 of the stay 90, the coupled state of the pair of passage forming members 82, 83 is maintained. Thus, a gap is prevented from being generated or formed between the pair of passage forming members 82, 83. Therefore, air can be sufficiently led to the engine 3 from the intake passage 8P of the air guide member 81.

Further, since the air guide member 81 is formed by coupling of the pair of passage forming members 82, 83 to each other, the flap FL can be provided in the intake passage 8P. Therefore, an amount of air being led to the engine 3 can be adjusted.

Further, the stay 90 is separately fabricated from the duct main body 81. In this case, flexibility in shape or design of the stay 90 is increased. Thus, the above-mentioned reinforcement portions rr can be formed at the stay 90. As a result, the weight of the front portion of the vehicle can be reduced while rigidity required to support each mirror device 40 is achieved.

### Other Embodiments

While the flap open/close device 84 is provided on or at the front upper surface portion 81c of the air guide member 81 in the above-mentioned embodiment, the invention is not limited to this. The flap open/close device 84 does not necessarily have to be provided on or at the front upper surface portion 81 c. The flap open/close device 84 may be provided at or on at least one of the side surface portions 82b, 83b of the air guide member 81. In this case, the opening op1 of the stay 90 is unnecessary.

While the rear partition wall BA1 and the front partition wall BA2 are formed by coupling of the partition wall 82d that is integrally formed with the left passage forming member 82 to the partition wall 83d integrally that is formed with the right passage forming member 83 in the above-mentioned embodiment, the invention is not limited to this. While the respective partition walls 82d, 83d are integrally formed with the passage forming members 82, 83, the partition wall 82d may only be integrally formed with the left passage forming member 82. The rear partition wall BA1 and the front partition wall BA2 may be formed by the partition wall 82d. In this case, the partition wall 82d has the same width as the intake passage 8P.

Alternatively, while the respective partition walls 82d, 83d are integrally formed with the partition forming members 82, 83, the partition wall 83d may only be integrally formed with the right passage formation member 83. The rear partition wall BA1 and the front partition wall BA2 may be formed by the partition wall 83d. In this case, the partition wall 83d has the same width as the intake passage 8P.

While the body cover 7 includes the left and right side cowls 73 in the above-mentioned embodiment, the invention is not limited to this. The body cover 7 does not have to include the left and right side cowls 73. In this case, the number of components of the motorcycle 100 can be reduced.

While the pair of handles 30 that are separated from each other is attached to the front fork FF in the above-mentioned embodiment, the invention is not limited to the above-mentioned example. The pair of handles 30 may be integrally formed from one tubular member.

While the above-mentioned embodiment is an example in which the present invention is applied to the motorcycle, the invention is not limited to this. The present invention may be applied to another saddle-ride or straddle-type vehicle, e.g. saddle-straddling type motor vehicle, such as a moped, scooter, snow-mobile, motor tricycle, an All Terrain Vehicle (ATV) or the like.

### Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the head pipe 103 is an example of a head pipe, the body frame 1X is an example of a body frame, the engine 3 is an example of an engine, the rear upper surface portion 81 a, the central upper surface portion 81 b and the front upper surface portion 81 c are examples of an upper surface, the rear bottom surface portion 81 d and the front bottom surface portion 81e are examples of a lower surface, the side surface portion 82b is an example of a left side surface, the side surface portion 83b is an example of a right side surface and the intake passage 8P, the upper passage 8PA and the lower passage 8PB are examples of an intake passage.

Further, the air guide member 81 is an example of an air guide member, the stay 90 is an example of an attachment member, the mirror device 40 is an example of a mirror, the flap FL, the flap open/close device 84, the surge tank 85, the solenoid valve 86, the check valve cv and the pipes P0 to P3 are examples of an adjustment mechanism.

Further, the upper surface portion 82a is an example of a first upper surface portion, the bottom surface portion 82c is an example of a first lower surface portion, the passage forming member 82 is an example of a first passage forming member, the upper surface portion 83a is an example of a second upper surface portion, the bottom surface portion 83c is an example of a second lower surface portion, and the passage forming member 83 is an example of a second passage forming member.

Further, the rear partition wall BA1 and the front partition wall BA2 are examples of a passage partition, the upper passage 8PA is an example of an upper passage, the lower passage 8PB is an example of a lower passage, the flap FL is an example of a current plate, the flap open/close device 84 is an example of a diaphragm open/close device, and the motorcycle 100 is an example of a saddle-ride or straddle-type vehicle, such as a saddle-straddling type motor vehicle.

Further, the surge tank 85, the solenoid valve 86, the check valve cv and the pipes P0 to P3 are examples of a driving device, the surge tank 85 is an example of a pressure accumulator, the solenoid valve 86 is an example of a switch valve, the front upper surface portion 81 c is an example of a portion, inclined downward and forward, of an upper surface of the air guide member, the pair of side surface holding portions 95 is an example of a pair of side surface holding portions, the duct attachment portion 91 is an example of a coupling portion, the opening op2 is an example of an opening, and the temperature sensor 87 is an example of a temperature sensor.

As each of constituent elements recited in the claims, various other elements having configurations or functions described in the claims can be also used.

The present invention can be effectively utilized for a vehicle and the like that can acquire a supercharging effect by ram pressure.

It will be appreciated that the embodiment of the invention hereinbefore described is given by way of example only, and is not meant to be limiting of the scope of the invention.

It will be appreciated that the term straddle-type vehicle or motor vehicle used herein, and as used in the art, is meant to include the following terms also used in the art:
saddled vehicle, saddle-ride type vehicle or motor vehicle, saddle-straddling type vehicle or motor vehicle, and includes:
   motorcycles and motorbikes as well as motor tricycles and All-Terrain Vehicles (ATVs), scooters, mopeds and snow mobiles.

## Claims

1. A saddle-ride or straddle-type vehicle (100), such as a saddle-straddling type motor vehicle, the vehicle (100) comprising:
a head pipe (103);
a body frame (1X) that extends rearward from the head pipe (103);
an engine (3) supported by the body frame (1X);
an air guide member (81) that has an upper surface (81 a, 81 b, 81 c), a lower surface (81d, 81e), a right side surface (83b) and a left side surface (82b), and is arranged in front of the head pipe (103) to form an intake passage (8P) that leads air to the engine (3);
an attachment member (90) integrally attached to at least part of the left side surface (82b) and at least part of the right side surface (83b) of the air guide member (81), and the upper surface (81 a, 81 b, 81 c) of the air guide member (81), in a vehicle width direction;
left and right rear-view mirrors attached to the attachment member (90); and
an adjustment mechanism (FL, 84, 85, 86, cv, P0 to P3) that adjusts an amount of air to be taken into the intake passage (8P) of the air guide member (81), wherein
the air guide member (81) comprises
a first passage forming member (82) that has the left side surface (82b), and has a respective first upper surface portion (82a) and a respective first lower surface portion (82c) extending rightward from the left side surface (82b),
a second passage forming member (83) that has the right side surface (83b), and has a respective second upper surface portion(83a) and a respective second lower surface portion (83c) extending leftward from the right side surface (83b), and
a passage partition (BA1, BA2) that partitions at least part of the intake passage (8P) into an upper passage (8PA) and a lower passage (8PB),
the intake passage (8P), the upper surface formed by the first and second upper surface portions (82a, 83a), and the lower surface (81d, 81e) formed by the first and second lower surface portions (82c, 83c) are formed by coupling of the first upper surface portion (82a) to the second upper surface portion (83a) and coupling of the first lower surface portion (82c) to the second lower surface portion (83c), wherein
the passage partition (BA1, BA2) is provided at or on at least one of the first and second passage forming members (82, 83),
the adjustment mechanism (FL, 84, 85, 86, cv, P0 to P3) comprises
a current plate (FL) provided in the upper passage (8PA) to be openable and closable, and
a diaphragm open/close device (84) that opens and closes the current plate (FL),
and
the diaphragm open/close device (84) is provided on the upper surface of the air guide member (81) to be sandwiched between the first upper surface portion (82a) of the first passage forming member (82) and the second upper surface portion (83a) of the second passage forming member (83), the vehicle (100) further comprising a driving device (P0 to P3) that is provided at or on at least one of the left and right side surfaces (82b, 83b)of the air guide member (81), and drives the diaphragm open/close device (84), wherein
the driving device (P0 to P3) comprises a pressure accumulator (85) that accumulates intake pressure of the engine (3),
the diaphragm open/close device (84) opens and closes the current plate (FL) based on the pressure accumulated by the pressure accumulator (85), the driving device (P0 to P3) further comprises a switch valve (86) configured to be switchable or operable between a first state, in which the accumulated pressure in the pressure accumulator (85) is led to the diaphragm open/close device (84) and a second state, in which an atmospheric pressure is led to the diaphragm open/close device (84), **characterised in that**, the pressure accumulator (85) is provided at or on at least one of the left and right side surfaces (82b, 83b) of the air guide member (81), and
the switch valve (86) is provided at or on at least another one of the left and right side surfaces (82b, 83b)of the air guide member (81).

2. The vehicle (100) according to claim 1, wherein
the upper surface (81 a, 81 b, 81 c) of the air guide member (81) has a portion that is inclined downward and forward.

3. The vehicle (100) according to claim 2, wherein
the diaphragm open/close device (84) is provided on the portion that is inclined downward of the upper surface (81 a, 81 b, 81 c) of the air guide member(81).

4. The vehicle (100) according to claims 2 or 3, wherein
the attachment member (90) comprises
a pair of side surface holding portions (95) that abuts against at least part of the right side surface (83b) and at least part of the left side surface (82b) of the air guide member (81), and
a coupling portion (91) that couples the pair of side surface holding portions (95) to each other at the portion that is inclined downward of the upper surface (81 a, 81 b, 81c),
the coupling portion (91) is arranged on the portion that is inclined downward of the upper surface (81 a, 81 b, 81 c) of the air guide member (81).

5. The vehicle (100) according to claim 4, wherein the coupling portion (91) has an opening (op2).

6. The vehicle (100) according to claim 5, wherein
the diaphragm open/close device (84) is arranged in the opening of the coupling portion (91).

7. The vehicle (100) according to any one of claims 1 to 6, further comprising a temperature sensor that detects a temperature of the air passing through the intake passage (8P), wherein
the temperature sensor is provided at or on at least one of the left and right side surfaces (82b, 83b)of the air guide member (81).

## Patentansprüche

1. Spreizsitz- oder Grätschsitzfahrzeug (100), wie ein Kraftfahrzeug mit reitsitzartigem Sitz, wobei das Fahrzeug (100) Folgendes aufweist:
ein Lenkkopfrohr (103),
einen Fahrzeugrahmen (1X), der sich rückwärtig vom Lenkkopfrohr (103) erstreckt,
einen vom Fahrzeugrahmen (1X) unterstützten Motor (3),
ein Luftleitelement (81), das eine obere Oberfläche (81a, 81b, 81c), eine untere Oberfläche (81d, 81e), eine rechtsseitige Oberfläche (83b) und eine linksseitige Oberfläche (82b) hat und vor dem Lenkkopfrohr (103) angeordnet ist, um einen Ansaugkanal (8P) zu bilden, der Luft zum Motor (3) führt,
ein Befestigungselement (90), das vollständig an mindestens einem Teil der linksseitigen Oberfläche (82b) und mindestens einem Teil der rechtsseitigen Oberfläche (83b) des Luftleitelements (81) und der oberen Oberfläche (81a, 81b, 81c) des Luftleitelements (81) in einer Fahrzeugbreitenrichtung befestigt ist,
einen linken und einen rechten, am Befestigungselement (90) befestigten Rückspiegel und
einen Justiermechanismus (FL, 84, 85, 86, cv, P0 bis P3), der eine in den Ansaugkanal (8P) des Luftleitelements (81) aufzunehmende Luftmenge justiert, wobei
das Luftleitelement (81) Folgendes aufweist:
ein erstes kanalbildendes Element (82), das die linksseitige Oberfläche (82b) hat und einen jeweiligen ersten oberen Oberflächenabschnitt (82a) und einen jeweiligen ersten unteren Oberflächenabschnitt (82c) hat, die nach rechts von der linksseitigen Oberfläche (82b) abstehen,
ein zweites kanalbildendes Element (83), das die rechtsseitige Oberfläche (83b) hat und einen jeweiligen zweiten oberen Oberflächenabschnitt (83a) und einen jeweiligen zweiten unteren Oberflächenabschnitt (83c) hat, die nach links von der rechtsseitigen Oberfläche (83b) abstehen, und
eine Kanaltrennwand (BA1, BA2), die mindestens einen Teil des Ansaugkanals (8P) in einen oberen Kanal (8PA) und einen unteren Kanal (8PB) aufteilt,
wobei der Ansaugkanal (8P), die von dem ersten und dem zweiten oberen Oberflächenabschnitt (82a, 83a) gebildete obere Oberfläche und die von dem ersten und dem zweiten unteren Oberflächenabschnitt (82c, 83c) gebildete untere Oberfläche (81d, 81e) durch Ankoppeln des ersten oberen Oberflächenabschnitts (82a) an den zweiten oberen Oberflächenabschnitt (83a) und Ankoppeln des ersten unteren Oberflächenabschnitts (82c) an den zweiten unteren Oberflächenabschnitt (83c) gebildet werden, wobei
die Kanaltrennwand (BA1, BA2) an oder auf mindestens einem des ersten und des zweiten kanalbildenden Elements (82, 83) vorgesehen ist,
der Justiermechanismus (FL, 84, 85, 86, cv, P0 bis P3) Folgendes aufweist:
eine im oberen Kanal (8PA) offenbar und verschließbar vorgesehene Strömungsplatte (FL) und
eine Membran-Öffnungs-/Schließvorrichtung (84), die die Strömungsplatte (FL) öffnet und schließt, und
die Membran-Öffnungs-/Schließvorrichtung (84) auf der oberen Oberfläche des Luftleitelements (81) vorgesehen ist, um zwischen dem ersten oberen Oberflächenabschnitt (82a) des ersten kanalbildenden Elements (82) und dem zweiten oberen Oberflächenabschnitt (83a) des zweiten kanalbildenden Elements (83) eingeschlossen zu werden, wobei das Fahrzeug (100) ferner eine Antriebsvorrichtung (P0 bis P3) aufweist, die an oder auf mindestens einer der linksseitigen und der rechtsseitigen Oberfläche (82b, 83b) des Luftleitelements (81) vorgesehen ist und die Membran-Öffnungs-/Schließvorrichtung (84) antreibt, wobei
die Antriebsvorrichtung (P0 bis P3) einen Druckspeicher (85) aufweist, der einen Ansaugdruck des Motors (3) speichert,
die Membran-Öffnungs-/Schließvorrichtung (84) die Strömungsplatte (FL) basierend auf dem vom Druckspeicher (85) gespeicherten Druck öffnet und schließt,
die Antriebsvorrichtung (P0 bis P3) ferner ein Umschaltventil (86) aufweist, das konfiguriert ist, um umschaltbar oder betreibbar zwischen einem ersten Zustand, in welchem der im Druckspeicher (85) gespeicherte Druck zur Membran-Öffnungs-/Schließvorrichtung (84) geführt wird, und einem zweiten Zustand, in welchem ein atmosphärischer Druck zur Membran-Öffnungs-/Schließvorrichtung (84) geführt wird, zu sein,
**dadurch gekennzeichnet, dass** der Druckspeicher (85) an oder auf mindestens einer der linksseitigen und der rechtsseitigen Oberfläche (82b, 83b) des Luftleitelements (81) vorgesehen ist und
das Umschaltventil (86) an oder auf mindestens einer anderen der linksseitigen und der rechtsseitigen Oberfläche (82b, 83b) des Luftleitelements (81) vorgesehen ist.

2. Fahrzeug (100) nach Anspruch 1, wobei
die obere Oberfläche (81a, 81b, 81c) des Luftleitelements (81) einen Abschnitt hat, der abwärts und vorwärts geneigt ist.

3. Fahrzeug (100) nach Anspruch 2, wobei
die Membran-Öffnungs-/Schließvorrichtung (84) auf dem Abschnitt vorgesehen ist, der abwärts von der oberen Oberfläche (81a, 81b, 81c) des Luftleitelements (81) geneigt ist.

4. Fahrzeug (100) nach Anspruch 2 oder 3, wobei
das Befestigungselement (90) Folgendes aufweist:
ein Paar Seitenoberflächen-Halteabschnitte (95), das an mindestens einem Teil der rechtsseitigen Oberfläche (83b) und mindestens einem Teil der linksseitigen Oberfläche (82b) des Luftleitelements (81) anliegt, und
einen Kopplungsabschnitt (91), der das Paar von Seitenoberflächen-Halteabschnitten (95) am Abschnitt, der abwärts von der oberen Oberfläche (81a, 81b, 81c) geneigt ist, miteinander koppelt,
wobei der Kopplungsabschnitt (91) auf dem Abschnitt angeordnet ist, der abwärts von der oberen Oberfläche (81a, 81b, 81c) des Luftleitelements (81) geneigt ist.

5. Fahrzeug (100) nach Anspruch 4, wobei der Kopplungsabschnitt (91) eine Öffnung (op2) hat.

6. Fahrzeug (100) nach Anspruch 5, wobei
die Membran-Öffnungs-/Schließvorrichtung (84) in der Öffnung des Kopplungsabschnitts (91) angeordnet ist.

7. Fahrzeug (100) nach einem der Ansprüche 1 bis 6, ferner aufweisend einen Temperatursensor, der eine Temperatur der durch den Ansaugkanal (8P) durchgehenden Luft ermittelt, wobei
der Temperatursensor an oder auf mindestens einer der linksseitigen und der rechtsseitigen Oberfläche (82b, 83b) des Luftleitelements (81) vorgesehen ist.

## Revendications

1. Véhicule de type à selle ou à califourchon (100), tel qu'un véhicule à moteur de type à selle à enfourcher, le véhicule (100) comprenant :
un tuyau de tête (103) ;
une ossature de corps (1X) qui s'étend vers l'arrière à partir du tuyau de tête (103) ;
un moteur (3) supporté par l'ossature de corps (1X) ;
un élément de guidage d'air (81) qui a une surface supérieure (81a, 81b, 81c), une surface inférieure (81d, 81e), une surface latérale droite (83b) et une surface latérale gauche (82b), et est agencé devant le tuyau de tête (103) pour former un passage d'admission (8P) qui conduit l'air au moteur (3) ;
un élément de fixation (90) fixé intégralement à au moins une partie de la surface latérale gauche (82b) et au moins une partie de la surface latérale droite (83b) de l'élément de guidage d'air (81), et la surface supérieure (81a, 81b, 81c) de l'élément de guidage d'air (81), dans une direction de la largeur du véhicule ;
des rétroviseurs gauche et droit fixés à l'élément de fixation (90) ; et
un mécanisme d'ajustement (FL, 84, 85, 86, cv, P0 à P3) qui ajuste une quantité d'air à amener dans le passage d'admission (8P) de l'élément de guidage d'air (81), dans lequel
l'élément de guidage d'air (81) comprend :
un premier élément de formation de passage (82) qui a la surface latérale gauche (82b), et a une première partie de surface supérieure respective (82a) et une première partie de surface inférieure respective (82c) s'étendant vers la droite à partir de la surface latérale gauche (82b),
un deuxième élément de formation de passage (83) qui a la surface latérale droite (83b), et a une deuxième partie de surface supérieure respective (83a) et une deuxième partie de surface inférieure respective (83c) s'étendant vers la gauche à partir de la surface latérale droite (83b), et
une partition de passage (BA1, BA2) qui partage au moins une partie du passage d'admission (8P) en un passage supérieur (8PA) et un passage inférieur (8PB),
le passage d'admission (8P), la surface supérieure formée par les première et deuxième parties de surface supérieure (82a, 83a), et la surface inférieure (81d, 81e) formée par les première et deuxième parties de surface inférieure (82c, 83c) sont formés par le couplage de la première partie de surface supérieure (82a) à la deuxième partie de surface supérieure (83a) et le couplage de la première partie de surface inférieure (82c) à la deuxième partie de surface inférieure (83c), dans lequel
la partition de passage (BA1, BA2) est prévue au niveau de ou sur au moins l'un des premier et deuxième éléments de formation de passage (82, 83),
le mécanisme d'ajustement (FL, 84, 85, 86, cv, P0 à P3) comprend
une plaque de courant (FL) prévue dans le passage supérieur (8PA) pour être ouvrable et refermable, et
un dispositif d'ouverture/de fermeture de diaphragme (84) qui ouvre et ferme la plaque de courant (FL), et
le dispositif d'ouverture/de fermeture de diaphragme (84) est prévu sur la surface supérieure de l'élément de guidage d'air (81) pour être pris en sandwich entre la première partie de surface supérieure (82a) du premier élément de formation de passage (82) et la deuxième partie de surface supérieure (83a) du deuxième élément de formation de passage (83), le véhicule (100) comprenant en outre un dispositif d'entraînement (P0 à P3) qui est prévu au niveau de ou sur au moins l'une des surfaces latérales gauche et droite (82b, 83b) de l'élément de guidage d'air (81), et entraîne le dispositif d'ouverture/de fermeture de diaphragme (84), dans lequel
le dispositif d'entraînement (P0 à P3) comprend un accumulateur de pression (85) qui accumule une pression d'admission du moteur (3),
le dispositif d'ouverture/de fermeture de diaphragme (84) ouvre et ferme la plaque de courant (FL) sur la base de la pression accumulée par l'accumulateur de pression (85),
le dispositif d'entraînement (P0 à P3) comprend en outre une vanne de commutation (86) configurée pour être commutable ou utilisable entre un premier état, dans lequel la pression accumulée dans l'accumulateur de pression (85) est conduite au dispositif d'ouverture/de fermeture de diaphragme (84), et un deuxième état, dans lequel une pression atmosphérique est conduite au dispositif d'ouverture/de fermeture de diaphragme (84),
**caractérisé en ce que** l'accumulateur de pression (85) est prévu au niveau de ou sur au moins l'une des surfaces latérales gauche et droite (82b, 83b) de l'élément de guidage d'air (81), et
la vanne de commutation (86) est prévue au niveau de ou sur au moins une autre des surfaces latérales gauche et droite (82b, 83b) de l'élément de guidage d'air (81).

2. Véhicule (100) selon la revendication 1, dans lequel
la surface supérieure (81a, 81b, 81c) de l'élément de guidage d'air (81) a une partie qui est inclinée vers le bas et vers l'avant.

3. Véhicule (100) selon la revendication 2, dans lequel
le dispositif d'ouverture/de fermeture de diaphragme (84) est prévu sur la partie qui est inclinée vers le bas de la surface supérieure (81a, 81b, 81c) de l'élément de guidage d'air (81).

4. Véhicule (100) selon les revendications 2 ou 3, dans lequel l'élément de fixation (90) comprend :
une paire de parties de maintien de surfaces latérales (95) qui vient buter contre au moins une partie de la surface latérale droite (83b) et au moins une partie de la surface latérale gauche (82b) de l'élément de guidage d'air (81), et
une partie de couplage (91) qui couple la paire de parties de maintien de surfaces latérales (95) l'une à l'autre au niveau de la partie qui est inclinée vers le bas de la surface supérieure (81a, 81b, 81c),
la partie de couplage (91) est agencée sur la partie qui est inclinée vers le bas de la surface supérieure (81a, 81b, 81c) de l'élément de guidage d'air (81).

5. Véhicule (100) selon la revendication 4, dans lequel la partie de couplage (91) a une ouverture (op2).

6. Véhicule (100) selon la revendication 5, dans lequel
le dispositif d'ouverture/de fermeture de diaphragme (84) est agencé dans l'ouverture de la partie de couplage (91).

7. Véhicule (100) selon l'une quelconque des revendications 1 à 6, comprenant en outre un capteur de température qui détecte une température de l'air passant à travers le passage d'admission (8P), dans lequel
le capteur de température est prévu au niveau de ou sur au moins l'une des surfaces latérales gauche et droite (82b, 83b) de l'élément de guidage d'air (81).
